# EUROPEAN PATENT APPLICATION

(11) **EP 4 694 534 A2**
(43) Date of publication of application: **11.02.2026**
(21) Application number: 24785200.7
(22) Date of filing: 03.04.2024
(51) Int. Cl.: H04W 74/08, H04W 24/08, H04W 72/25, H04W 92/18, H04L 5/00, H04L 1/18, H04W 4/40

(54) **METHOD AND DEVICE FOR PERFORMING COMMUNICATION IN WIRELESS COMMUNICATION SYSTEM**

(30) Priority: 03.04.2023 KR 20230043665; 17.04.2023 US 202363459710 P; 17.04.2023 US 202363460009 P; 17.04.2023 US 202363460014 P; 11.05.2023 US 202363465836 P; 18.05.2023 KR 20230064582
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Plasseraud IP
(86) International application number: PCT/KR2024/004308
(87) International publication number: WO 2024/210497

(57) **Abstract**

A method for performing wireless communication by a first device, and a device for supporting same are provided The method may comprise the steps of: obtaining information relating to the maximum number of counts by which a listen-before-talk (LBT) failure has been detected; and on the basis that an LBT counter has a value greater than or equal to the maximum number of counts by which the LBT failure has been detected, continuously detecting the LBT failure. For example, on the basis that information about an LBT failure for a first resource block (RB) set is obtained, a first LBT counter may be incremented by a value of 1 for the first RB set. For example, on the basis that the first LBT counter is incremented by a value of 1 for the first RB set and that no guard band is configured between RB sets, a second LBT counter may be incremented by a value of 1 for a second RB set that is an RB set different from the first RB set.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL PROBLEM

The present disclosure provides a method and device capable of effectively providing services in a wireless communication system. In particular, the present disclosure provides a method and device for communication.

### TECHNICAL SOLUTION

Based on an embodiment, a method for performing wireless communication by a first device may be provided. The method may include: obtaining information related to a maximum count for listen before talk (LBT) failure detection; and based on that an LBT counter is greater than or equal to the maximum count for the LBT failure detection. detecting a consistent LBT failure. For example, based on that information related to an LBT failure for the first RB set is obtained, a first LBT counter may be incremented by 1 for a first resource block (RB) set. For example, based on that the first LBT counter is incremented by 1 for the first RB set, and based on that a guard band between RB sets is not configured, a second LBT counter may be incremented by 1 for a second RB set different from the first RB set.

Based on an embodiment, a first device adapted to perform wireless communication may be provided. The first device may include: at least one transceiver; at least one processor; and at least one memory connected to the at least one processor and storing instructions, and the instructions, based on being executed by the at least one processor, may cause the first device to perform operations comprising: obtaining information related to a maximum count for listen before talk (LBT) failure detection; and based on that an LBT counter is greater than or equal to the maximum count for the LBT failure detection. detecting a consistent LBT failure. For example, based on that information related to an LBT failure for the first RB set is obtained, a first LBT counter may be incremented by 1 for a first resource block (RB) set. For example, based on that the first LBT counter is incremented by 1 for the first RB set, and based on that a guard band between RB sets is not configured, a second LBT counter may be incremented by 1 for a second RB set different from the first RB set.

Based on an embodiment, a processing device adapted to control a first device may be provided. For example, the processing device may include: at least one processor; and at least one memory connected to the at least one processor and storing instructions, and the instructions, based on being executed by the at least one processor, may cause the first device to perform operations comprising: obtaining information related to a maximum count for listen before talk (LBT) failure detection; and based on that an LBT counter is greater than or equal to the maximum count for the LBT failure detection. detecting a consistent LBT failure. For example, based on that information related to an LBT failure for the first RB set is obtained, a first LBT counter may be incremented by 1 for a first resource block (RB) set. For example, based on that the first LBT counter is incremented by 1 for the first RB set, and based on that a guard band between RB sets is not configured, a second LBT counter may be incremented by 1 for a second RB set different from the first RB set.

Based on an embodiment, a non-transitory computer-readable storage medium storing instructions may be provided. The instructions, based on being executed, may cause a first device to perform operations comprising: obtaining information related to a maximum count for listen before talk (LBT) failure detection; and based on that an LBT counter is greater than or equal to the maximum count for the LBT failure detection. detecting a consistent LBT failure. For example, based on that information related to an LBT failure for the first RB set is obtained, a first LBT counter may be incremented by 1 for a first resource block (RB) set. For example, based on that the first LBT counter is incremented by 1 for the first RB set, and based on that a guard band between RB sets is not configured, a second LBT counter may be incremented by 1 for a second RB set different from the first RB set.

Based on an embodiment, a method for performing wireless communication by a second device may be provided. The method may include: receiving, from a first device, control information on a physical control channel for scheduling a physical shared channel; and receiving, from the first device, data on the physical shared channel. For example, information related to a maximum count for listen before talk (LBT) failure detection may be obtained by the first device. For example, based on that the reception of the data is failed due to an LBT failure, a first LBT counter for the first device may be incremented by 1 for a first resource block (RB) set in which the reception is failed. For example, based on that the first LBT counter is incremented by 1 for the first RB set, and based on that a guard band between RB sets is not configured, a second LBT counter for the first device may be incremented by 1 for a second RB set different from the first RB set.

Based on an embodiment, a second device adapted to perform wireless communication may be provided. The second device may include: at least one transceiver; at least one processor; and at least one memory connected to the at least one processor and storing instructions, and the instructions, based on being executed by the at least one processor, may cause the second device to perform operations comprising: receiving, from a first device, control information on a physical control channel for scheduling a physical shared channel; and receiving, from the first device, data on the physical shared channel. For example, information related to a maximum count for listen before talk (LBT) failure detection may be obtained by the first device. For example, based on that the reception of the data is failed due to an LBT failure, a first LBT counter for the first device may be incremented by 1 for a first resource block (RB) set in which the reception is failed. For example, based on that the first LBT counter is incremented by 1 for the first RB set, and based on that a guard band between RB sets is not configured, a second LBT counter for the first device may be incremented by 1 for a second RB set different from the first RB set.

Based on an embodiment, a processing device adapted to control a second device may be provided. For example, the processing device may include: at least one processor; and at least one memory connected to the at least one processor and storing instructions, and the instructions, based on being executed by the at least one processor, may cause the second device to perform operations comprising: receiving, from a first device, control information on a physical control channel for scheduling a physical shared channel; and receiving, from the first device, data on the physical shared channel. For example, information related to a maximum count for listen before talk (LBT) failure detection may be obtained by the first device. For example, based on that the reception of the data is failed due to an LBT failure, a first LBT counter for the first device may be incremented by 1 for a first resource block (RB) set in which the reception is failed. For example, based on that the first LBT counter is incremented by 1 for the first RB set, and based on that a guard band between RB sets is not configured, a second LBT counter for the first device may be incremented by 1 for a second RB set different from the first RB set.

Based on an embodiment, a non-transitory computer-readable storage medium storing instructions may be provided. The instructions, based on being executed, may cause a second device to perform operations comprising: receiving, from a first device, control information on a physical control channel for scheduling a physical shared channel; and receiving, from the first device, data on the physical shared channel. For example, information related to a maximum count for listen before talk (LBT) failure detection may be obtained by the first device. For example, based on that the reception of the data is failed due to an LBT failure, a first LBT counter for the first device may be incremented by 1 for a first resource block (RB) set in which the reception is failed. For example, based on that the first LBT counter is incremented by 1 for the first RB set, and based on that a guard band between RB sets is not configured, a second LBT counter for the first device may be incremented by 1 for a second RB set different from the first RB set.

### ADVANTAGEOUS EFFECTS

The present disclosure may provide a method and device capable of effectively providing services in a wireless communication system. For example, through embodiments proposed by the present disclosure, communication may be efficiently performed.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an example of a wireless communication environment, based on an embodiment of the present disclosure.
FIG. 10 shows an interlaced RB, based on an embodiment of the present disclosure.
FIG. 11 shows an example of a wireless communication system supporting an unlicensed band, based on an embodiment of the present disclosure.
FIG. 12 shows a method of occupying resources in an unlicensed band, based on an embodiment of the present disclosure.
FIG. 13 shows a case in which a plurality of LBT-SBs are included in an unlicensed band, based on an embodiment of the present disclosure.
FIG. 14 shows CAP operations performed by a base station to transmit a downlink signal through an unlicensed band, based on an embodiment of the present disclosure.
FIG. 15 shows type 1 CAP operations performed by a UE to transmit an uplink signal, based on an embodiment of the present disclosure.
FIG. 16 shows a channel access procedure, based on an embodiment of the present disclosure.
FIG. 17 shows a procedure for beam failure detection, based on an embodiment of the present disclosure.
FIG. 18 shows a procedure related to RLF detection, based on an embodiment of the present disclosure.
FIG. 19 shows a procedure related to RLF detection, based on an embodiment of the present disclosure.
FIG. 20 shows a procedure related to LBT detection, based on an embodiment of the present disclosure.
FIG. 21 shows a procedure related to LBT depending on whether a guard band is present, based on an embodiment of the present disclosure.
FIG. 22 shows a method for a first device to perform wireless communication, based on an embodiment of the present disclosure.
FIG. 23 shows a method for a second device to perform wireless communication, based on an embodiment of the present disclosure.
FIG. 24 shows a communication system 1, based on an embodiment of the present disclosure.
FIG. 25 shows wireless devices, based on an embodiment of the present disclosure.
FIG. 26 shows a signal process circuit for a transmission signal, based on an embodiment of the present disclosure.
FIG. 27 shows another example of a wireless device, based on an embodiment of the present disclosure.
FIG. 28 shows a hand-held device, based on an embodiment of the present disclosure.
FIG. 29 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

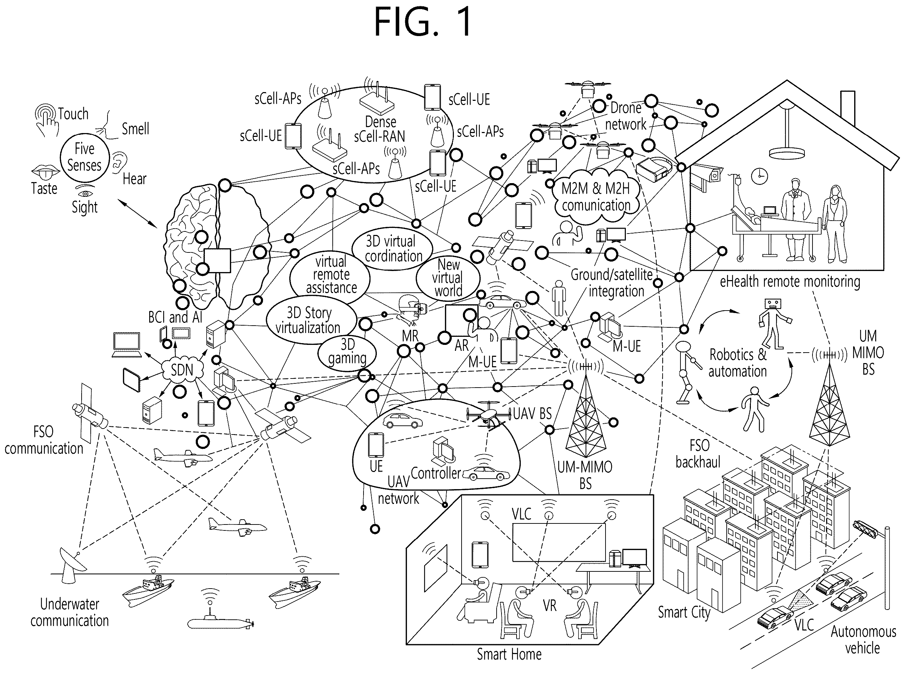

FIG. 1 shows a communication structure providable in a 6G system, based on an embodiment of the present disclosure. The embodiment of FIG. 1 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

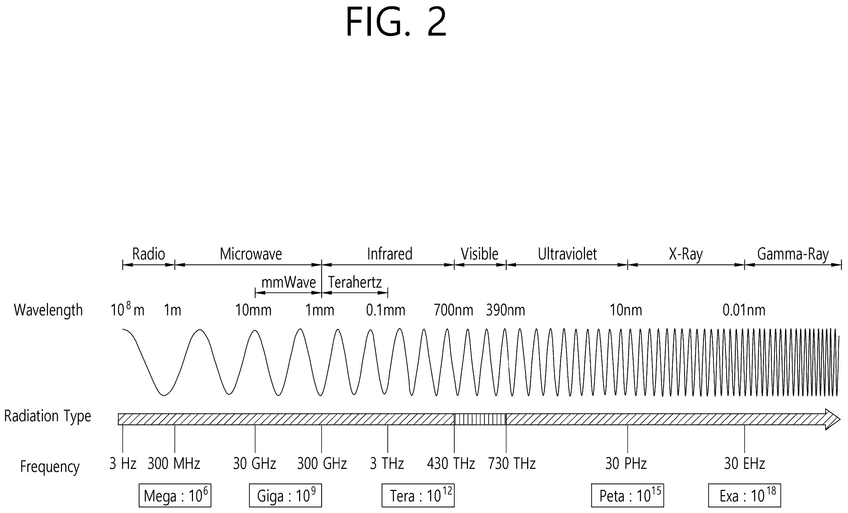

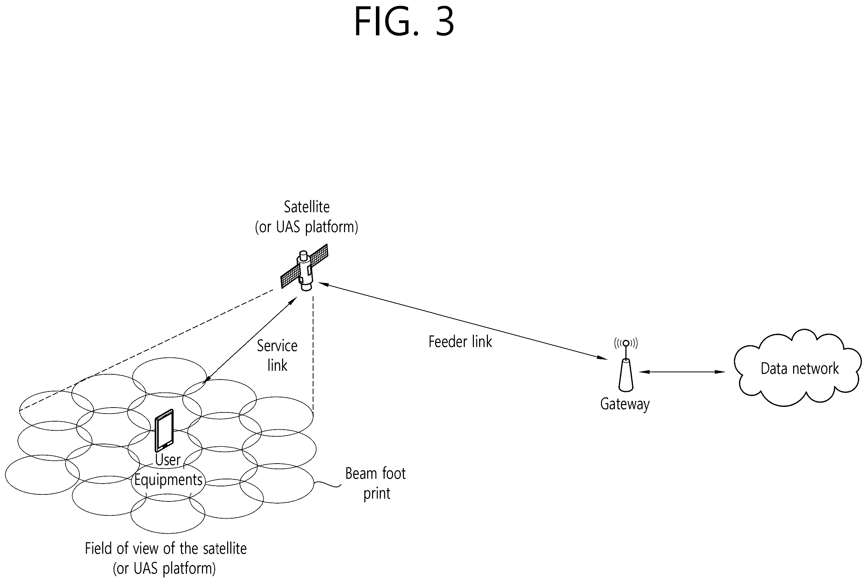

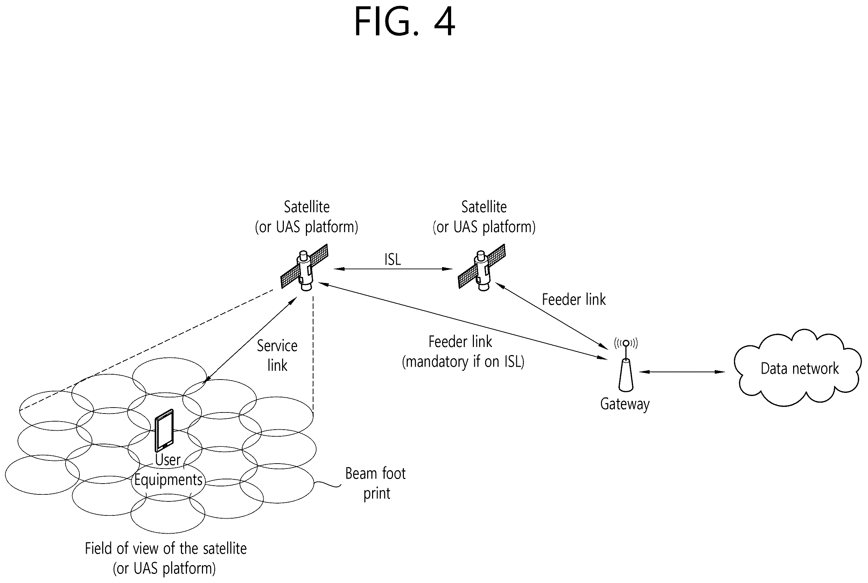

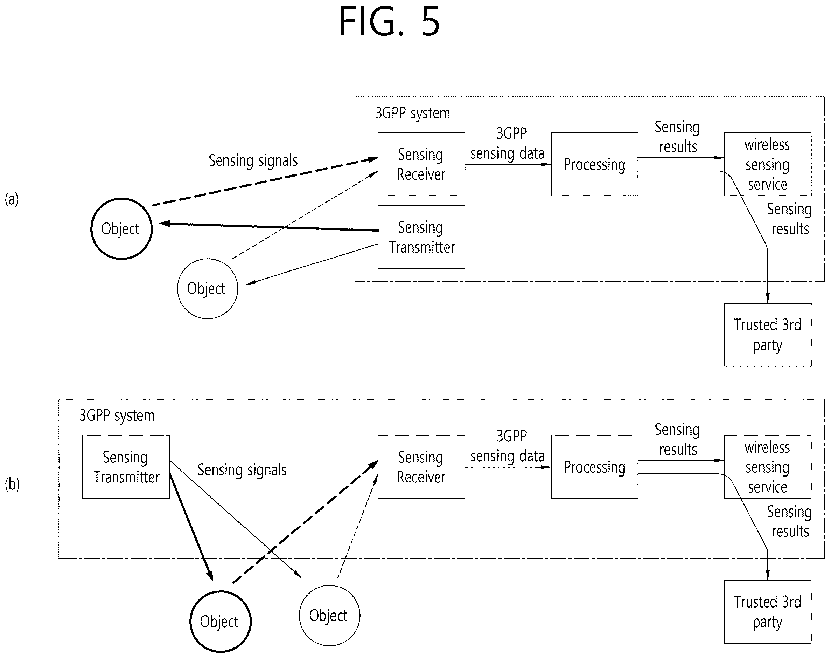

Core implementation technology of 6G system is described below.
- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

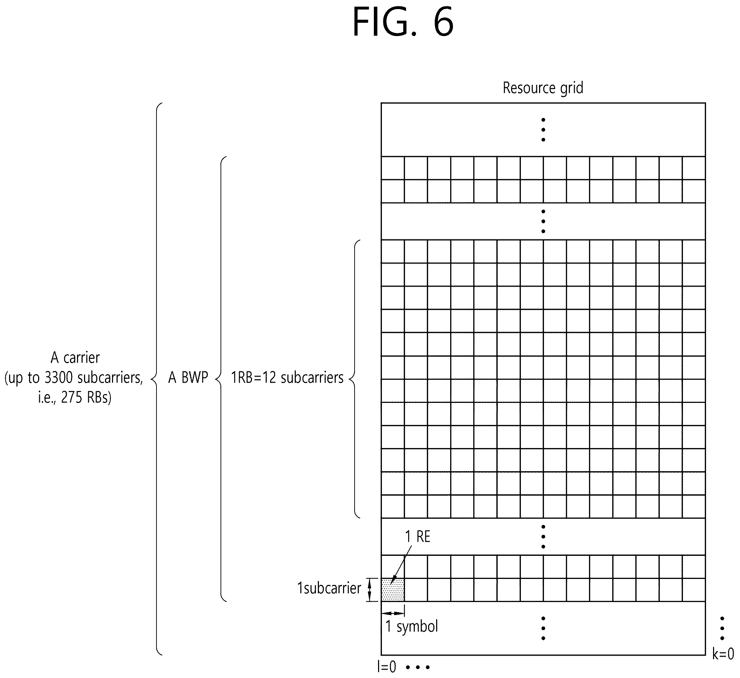

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

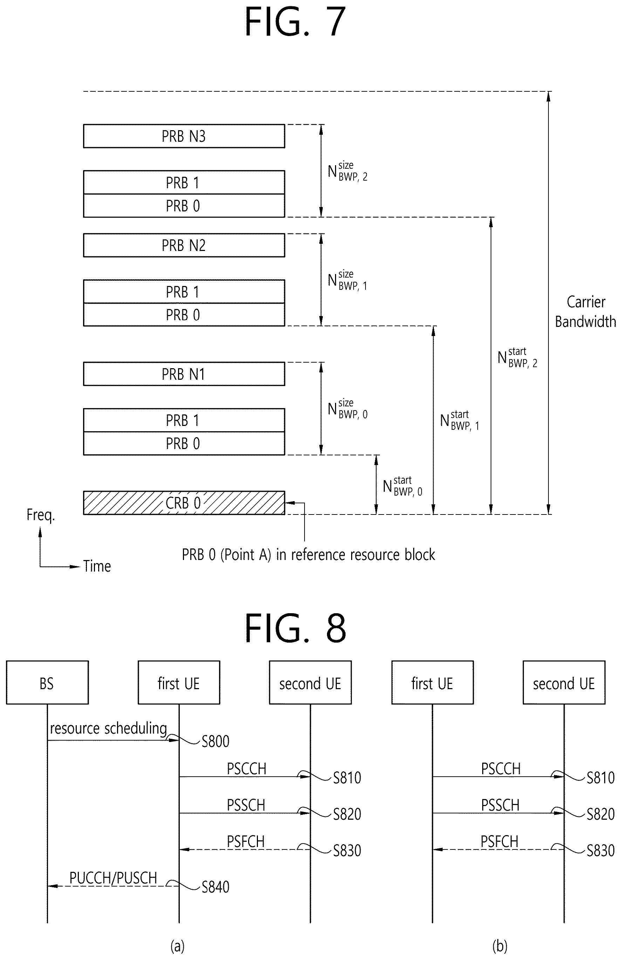

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

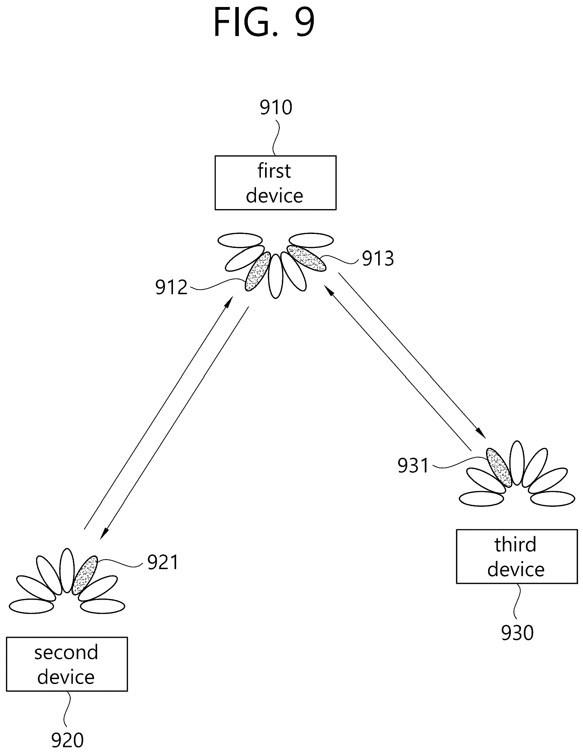

FIG. 9 shows an example of a wireless communication environment, based on an embodiment of the present disclosure. The embodiment of FIG. 9 may be combined with various embodiments of the present disclosure.

Referring to FIG. 9, a first device (910), a second device (920), and a third device (930) are shown as part of devices using wireless channels in a wireless communication system. FIG. 9 shows only one first device (910), one second device (920), and one third device (930), but it is not limited thereto.

According to the present disclosure, the first device (910), second device (920), and/or third device (930) may transmit and receive wireless signals in a millimeter-wave (mmWave) band. For example, to improve channel gain, the first device (910), second device (920), and/or third device (930) may perform beamforming. Here, beamforming may include transmission beamforming and reception beamforming. For example, the first device (910), second device (920), and/or third device (930) may provide directivity to transmission or reception signals. For example, the first device (910), second device (920), and/or third device (930) may select serving beams (912, 913, 921, 931) through beam search or beam management procedures. After the serving beams (912, 913, 921, 931) are selected, communication may be performed through resources quasi co-located (QCL) with resources transmitting the serving beams.

According to the present disclosure, the first device (910), second device (920), and/or third device (930) may include an antenna array. Each antenna included in the antenna array may be referred to as an array element or antenna element. The antenna array may be configured in various forms such as a linear array or a multi-layer array. The antenna array may be referred to as a massive antenna array. For example, the antenna array may include multiple sub-arrays, each including a plurality of antenna elements.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

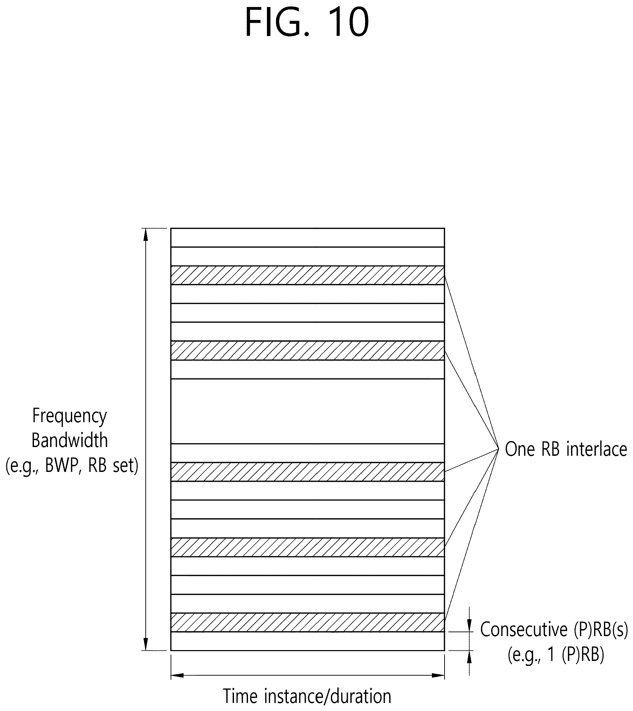

FIG. 10 shows an interlaced RB, based on an embodiment of the present disclosure. The embodiment of FIG. 10 may be combined with various embodiments of the present disclosure.

Referring to FIG. 10, interlaces of RBs may be defined in a frequency domain. An interlace m ∈ {0, 1, ..., M-1} may comprise (common) RBs {m, M+m, 2M+m, 3M+m, ...}, where M may represent the number of interlaced RBs given by Table 3.

**[Table 3]**

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

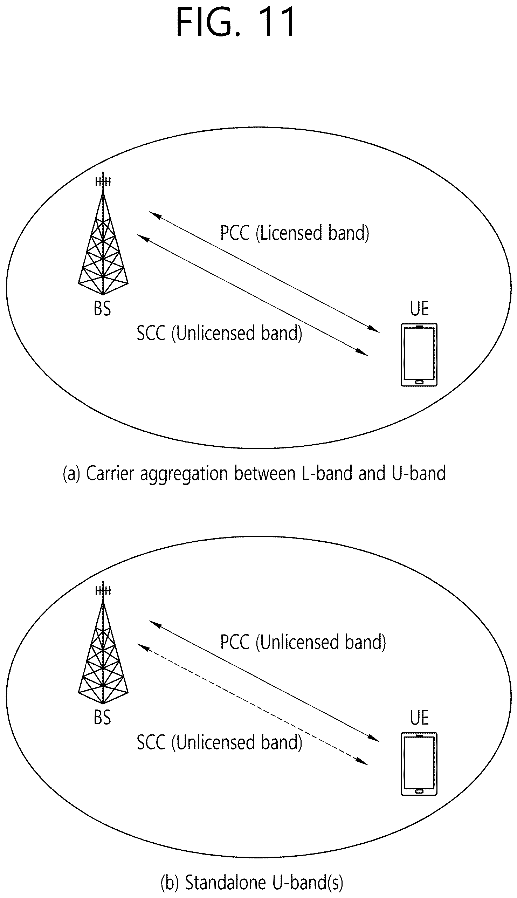

FIG. 11 shows an example of a wireless communication system supporting an unlicensed band, based on an embodiment of the present disclosure. For example, FIG. 11 may include an unlicensed spectrum (NR-U) wireless communication system. The embodiment of FIG. 11 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 11, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 11. For example, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 11, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

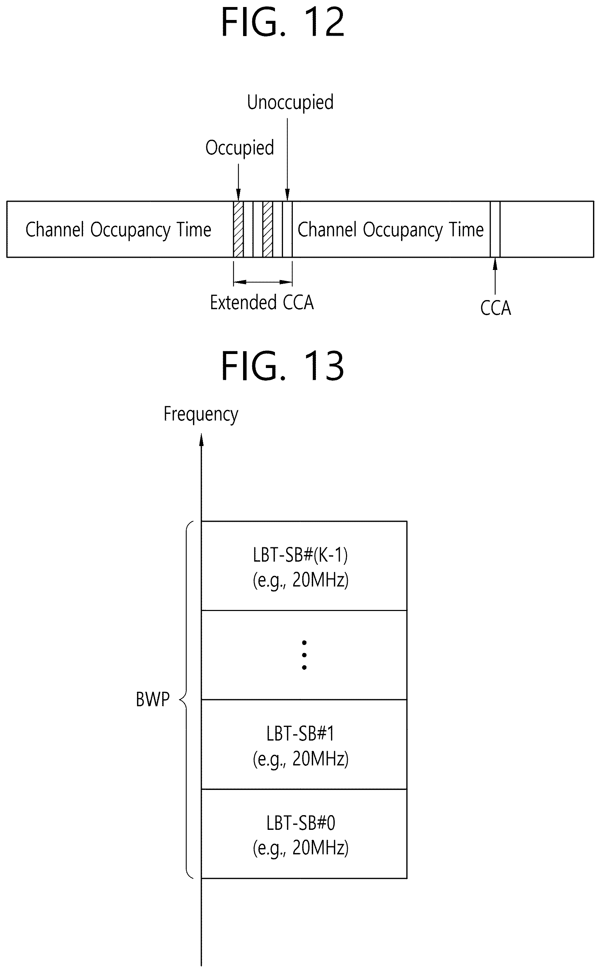

FIG. 12 shows a method of occupying resources in an unlicensed band, based on an embodiment of the present disclosure. The embodiment of FIG. 12 may be combined with various embodiments of the present disclosure.

Referring to FIG. 12, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 4 shows an example of the channel access procedure (CAP) supported in NR-U.

**[Table 4]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 4, the LBT type or CAP for DL/UL/SL transmission may be defined. However, Table 4 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 13 shows a case in which a plurality of LBT-SBs are included in an unlicensed band, based on an embodiment of the present disclosure. The embodiment of FIG. 13 may be combined with various embodiments of the present disclosure.

Referring to FIG. 13, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 5 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 5]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

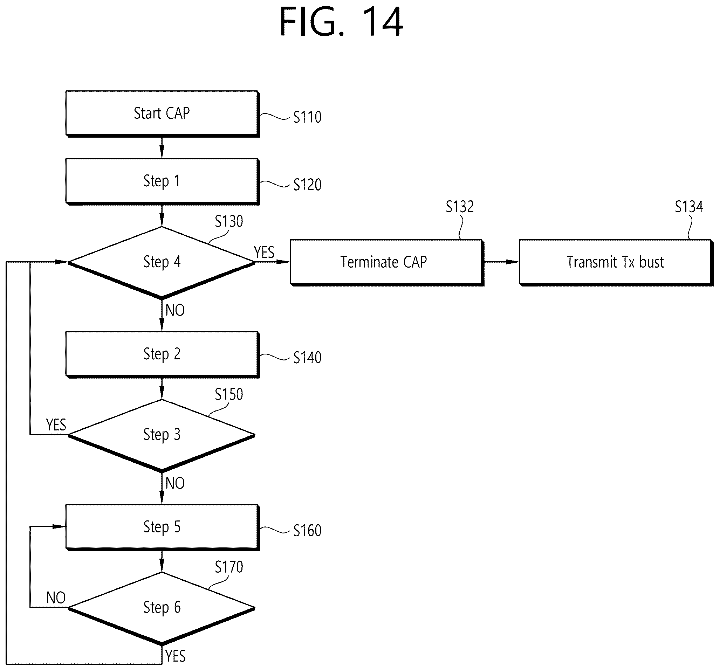

FIG. 14 shows CAP operations performed by a base station to transmit a downlink signal through an unlicensed band, based on an embodiment of the present disclosure. The embodiment of FIG. 14 may be combined with various embodiments of the present disclosure.

Referring to FIG. 14, the base station may sense whether a channel is idle for sensing slot durations of a defer duration T_{d}. Then, if a counter N is zero, the base station may perform transmission (S134). In this case, the base station may adjust the counter N by sensing the channel for additional sensing slot duration(s) according to the following steps:
Step 1) (S 120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 6 shows that mₚ, a minimum contention window (CW), a maximum CW, a maximum channel occupancy time (MCOT), and an allowed CW size, which are applied to the CAP, vary depending on channel access priority classes.

**[Table 6]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 6, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration Tr (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f}(=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for Tr = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

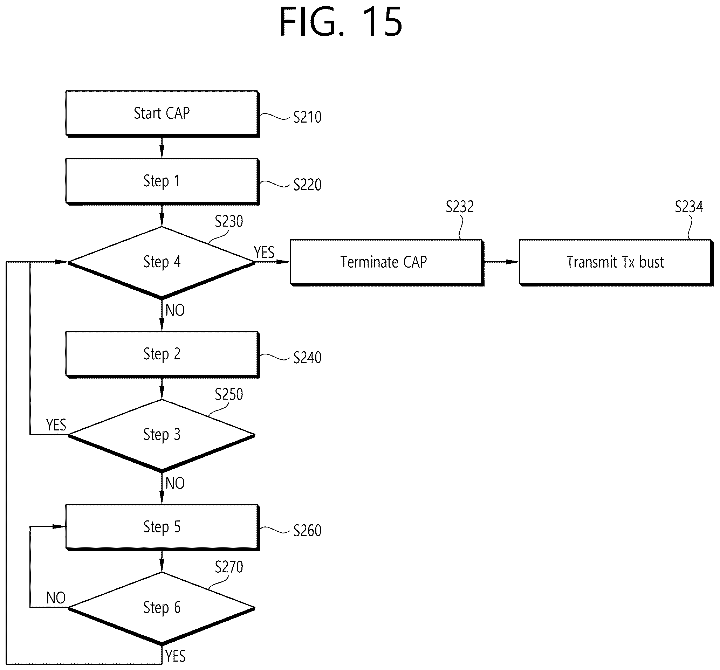

FIG. 15 shows type 1 CAP operations performed by a UE to transmit an uplink signal, based on an embodiment of the present disclosure. The embodiment of FIG. 15 may be combined with various embodiments of the present disclosure.

Referring to FIG. 15, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 7 shows that mₚ, a minimum CW, a maximum CW, a maximum channel occupancy time (MCOT), and an allowed CW size, which are applied to the CAP, vary depending on channel access priority classes.

**[Table 7]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 7, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, Tr includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, after selecting a random value between the minimum CW and the maximum CW mapped to the CAPC, the UE may select a backoff counter (BC) between zero and the random value. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛₗ), the UE may attempt to transmit data by occupying the channel. If the UE attempting to transmit data detects a collision, the UE may increase the CW size mapped to the CAPC, and the UE may reselect a BC between zero and the increased CW. The UE that successfully transmits a packet may initialize the CW size (to the CW min).

For example, Tₛₗ (= 9 usec) is a basic sensing unit or sensing slots, and may include a measurement duration for at least 4 usec. For example, the front 9 usec of T_{f} (= 16 usec) may be configured to be Tₛₗ. For example, mₚ may be a constant mapped per CAPC and used in T_{d} calculation. For example, a smaller value may be mapped to a lower CACP value (higher priority).

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 20 usec gap. The type 2A may be used to initiate transmission of SSB and non-unicast DL information. For example, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. For example, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). For example, the operation in which the UE checks whether the channel is idle or busy may be referred to as Clear Channel Assessment (CCA), and the UE may check whether the channel is idle or busy for the CCA duration.

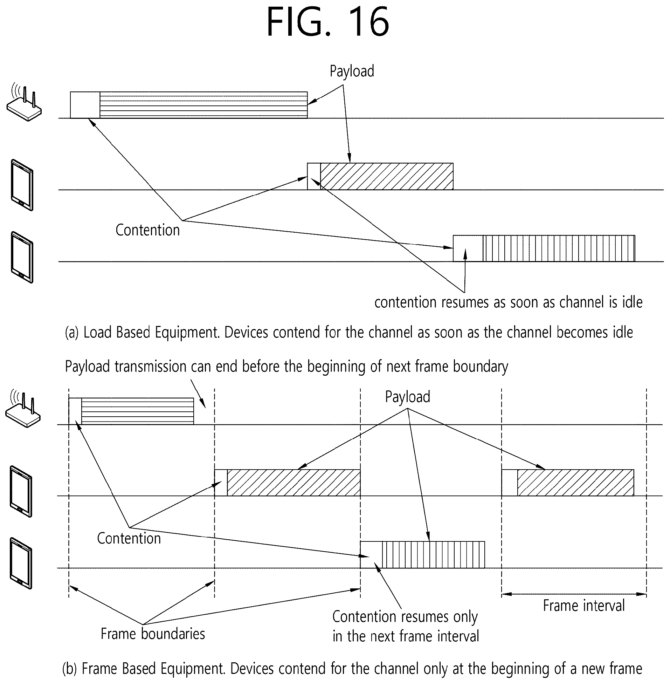

FIG. 16 shows a channel access procedure, based on an embodiment of the present disclosure. Specifically, (a) of FIG. 16 shows an example of a dynamic channel access procedure (load based equipment, LBE), and (b) of FIG. 16 shows an example of a semi-static channel access procedure (frame based equipment, FBE). The embodiment of FIG. 16 may be combined with various embodiments of the present disclosure.

Referring to (a) of FIG. 16, if a channel is idle, the UE may perform contention with other UEs on an unlicensed band to immediately occupy the channel. In addition, if the UE occupies the channel, the UE may transmit data.

Referring to (b) of FIG. 16, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins. The UE may perform type 2 series LBT operation within the FFP. For example, within the FFP, the UE may not perform random backoff-based LBT, and the UE may sense a channel for a short period of time and perform data transmission if the channel is idle.

For example, beam management operations in mmWave frequencies have recently been introduced in the conventional NR Uu (operation between base station and UE). For example, beam management operations may include beam scheduling, beam selection, beam failure recovery, etc. In the present disclosure, beam management operations (e.g., beam failure recovery) are proposed as follows. For example, the following proposal may relate to beam management operations in NR. Meanwhile, the following proposal is not limited to NR. For example, the following proposal may relate to beam management operations in sidelink. Meanwhile, the following proposal is not limited to sidelink. For example, the following proposal may relate to beam management operations in NR sidelink.

A UE may perform FR2 (mmWave frequencies-based communication) operations based on the following operations. For example, FR2 may be sidelink FR2. For example, sidelink FR2 may refer to sidelink-based communication using sidelink mmWave frequencies. Meanwhile, the following operations are not limited to sidelink FR2. The present disclosure is not limited to sidelink FR2. For example, the present disclosure may be applicable to 5G FR2 or beyond 5G FR2 (e.g., 6G FR2).

- Beam sweeping operation: a UE may perform operations to find the optimal beam (e.g., transmit beam, receive beam) by sweeping beams used for communication. For example, communication during beam sweeping operations may be sidelink communication. For example, the UE may perform an operation of covering a spatial area using a transmit beam and/or receive beam for a specific time interval based on a pre-configured scheme.
- Beam measurement operation: a UE may perform operations to find a reference signal (RS) whose measurement value greater than or equal to a threshold while measuring RS transmitted by the peer UE.
- Beam selection operation: a UE may perform operations to select the optimal beam (e.g., transmit beam, receive beam) based on beam measurement results.
- Beam reporting operation: a UE may perform operations to report the selected optimal beam to the peer UE or base station.
- Beam pairing operation: A UE may perform an operation to synchronize (pair) beams (e.g., transmit beam/receive beam) between UEs to enable communication via inter-UE beams (e.g., transmit beam/receive beam).

In (sidelink) (FR2), for beam management (e.g., beam sweeping, beam measurement, beam selection, beam pairing) of a UE, the UE may transmit and receive a reference signal (RS) to select/determine and adjust/manage a beam usable between one another.

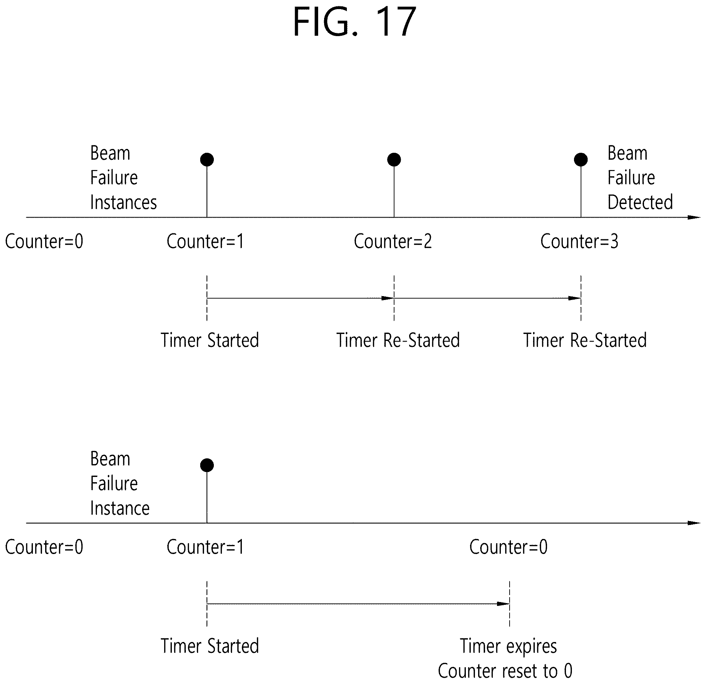

FIG. 17 shows a procedure for beam failure detection, based on an embodiment of the present disclosure. The embodiment of FIG. 17 may be combined with various embodiments of the present disclosure.

Referring to FIG. 17, when a UE has detected a failure of a beam used for communication greater than or equal to a threshold, the UE may trigger a beam failure recovery procedure to recover the beam. For example, when the UE has detected a failure of a beam used for sidelink communication greater than or equal to a threshold, the UE may trigger a sidelink beam failure recovery procedure to recover the beam. For example, when the MAC layer of the UE has received beam failure instances from the physical layer greater than or equal to a threshold, the UE may trigger a beam failure recovery procedure to recover the beam. For example, the MAC layer of the UE may perform a procedure of triggering the beam failure recovery procedure to recover the beam. For example, when the MAC layer of the UE has received beam failure instances from the physical layer greater than or equal to a threshold, the UE may trigger a sidelink beam failure recovery procedure to recover the beam. For example, the MAC layer of the UE may perform a procedure of triggering the sidelink beam failure recovery procedure to recover the beam. The present disclosure has been described with respect to sidelink beam failure but is not limited thereto. For example, the present disclosure may be applied not only to sidelink beam failures but also to beam failures other than sidelink beam failures.

In FIG. 17, for example, the MAC layer may be configured by RRC with a beam failure recovery procedure which is used for indicating when beam failure is detected. For example, beam failure may be detected by counting beam failure instance indication from the lower layers to the MAC entity. For example, the RRC may configure a beam failure instance maximum count and a beam failure detection timer. For example, the beam failure instance maximum count may determine after how many beam failure events the UE triggers beam failure recovery. For example, the beam failure instance maximum count may be configured to 3. For example, the beam failure detection timer may be timer for beam failure detection. For example, if beam failure instance indication has been received from lower layers, the MAC entity may start or restart the beam failure detection timer. For example, if beam failure instance indication has been received from lower layers, the MAC entity may increment a beam failure instance counter by 1. For example, if the beam failure instance counter is greater than or equal to the beam failure instance maximum count, the MAC entity may detect beam failure. For example, if a beam failure instance counter is greater than or equal to 3, beam failure may be detected. For example, if the beam failure instance counter is greater than or equal to the beam failure instance maximum count, the MAC entity may trigger a beam failure recovery. For example, if a beam failure instance counter is greater than or equal to 3, a beam failure recovery procedure may be triggered. For example, if the beam failure detection timer expires, the MAC entity may set the beam failure instance counter to zero.

In FIG. 17, it is shown that the beam failure instance maximum count is configured to 3, but it is not limited thereto. For example, the beam failure instance maximum count may be configured to a value different from 3.

In this disclosure, subsequent operations of a UE in case the (SL) BFR procedure fails are proposed as follows.

When beam failure recovery (BFR) is triggered, the UE may transmit an (SL) BFR MAC CE (e.g., for indicating a problem with the currently operating TX or RX beam, indicating an issue related to the reference signal related to the current TX or RX beam, or indicating the best TX or RX beam for beam failure recovery triggered by BFR) and also activate an (SL) BFR timer to start the (SL) BFR procedure. If the UE does not receive feedback (e.g., (SL) BFR confirmation MAC CE or HARQ ACK feedback) for the transmitted (SL) BFR MAC CE until the expiry of the BFR timer, the UE may initiate the following procedure.
- The UE may retransmit the (SL) BFR MAC CE (e.g., to indicate an issue with the currently operating TX or RX beam, indicate an issue related to the reference signal related to the current TX or RX beam, or indicate the best TX or RX beam for beam failure recovery triggered by BFR) and re-trigger the BFR procedure.
- The UE may consider the (SL) BFR procedure as failed, declare (or indicate or detect) an (SL) RLF on the PC5 RRC connection that triggered the (SL) BFR, and report (or indicate) to the base station or peer UE with cause: (sidelink) RLF based on (SL) beam failure recovery (BFR) failure.
- The UE may re-trigger or re-perform at least one operation among beam sweeping, beam selection, or beam pairing.

For example, when a UE detects a beam failure in a beam in use for (sidelink) communication by a threshold (or greater than or equal to the threshold), the UE may trigger a (sidelink) beam failure recovery procedure and perform a procedure for recovering a beam. In the present disclosure, when a (sidelink) beam failure occurs by a threshold (or greater than or equal to the threshold), a BFR operation of the UE may be defined as follows,

In the present disclosure, when an (SL) BFR procedure fails, a subsequent operation of the UE is proposed as follows.

When a beam failure recovery (BFR) is triggered, the UE may transmit an (SL) BFR MAC CE (e.g., for a purpose of indicating that there is a problem in a currently operating transmit beam or receive beam, or for a purpose of indicating that there is a problem in a reference signal related to a currently operating transmit beam or receive beam, or for a purpose of indicating a best transmit beam or a best receive beam for beam failure recovery because BFR is triggered) and may also run an (SL) BFR timer to start an (SL) BFR process. If feedback (e.g., an (SL) BFR confirmation MAC CE ((SL) BFR confirmation MAC CE) or HARQ ACK feedback) for the transmitted (SL) BFR MAC CE is not received until the BFR timer expires, the UE may start the following procedure.
- The UE may retransmit the (SL) BFR MAC CE (e.g., for a purpose of indicating that there is a problem in a currently operating transmit beam or receive beam, or for a purpose of indicating that there is a problem in a reference signal related to a currently operating transmit beam or receive beam, or for a purpose of indicating a best transmit beam or a best receive beam for beam failure recovery because BFR is triggered) to retrigger the BFR process.
- The UE may consider the (SL) BFR process as a failure and may declare (or indicate or detect) (SL) RLF for a PC5 RRC connection for which (SL) BFR is triggered and may report (or indicate) to a base station or a peer UE (with cause: an (SL) RLF based on a beam failure recovery (BFR) failure).
- The UE may retrigger or re-perform at least one operation among beam sweeping, beam selection, or beam pairing.

In the present disclosure, a (sidelink) DRX configuration may include at least one parameter among the following.
- SL drx-onDurationTimer: the duration at the beginning of a SL DRX Cycle;
- SL drx-SlotOffset: the delay before starting the sl drx-onDurationTimer;
- SL drx-InactivityTimer: the duration after the PSCCH occasion in which a PSCCH indicates a new SL transmission for the MAC entity;
- SL drx-StartOffset: the subframe where the SL DRX cycle start;
- SL drx-Cycle: the SL DRX cycle;
- SL drx-HARQ-RTT-Timer (per HARQ process or per sidelink process): the minimum duration before an assignment for HARQ retransmission is expected by the MAC entity.
- SL drx-RetransmissionTimer (per HARQ process or per sidelink process): the maximum duration until a retransmission is received

In the present disclosure, the following (sidelink) DRX timers may be used for the following purposes.
- (Sidelink) DRX onDuration timer: a duration in which a UE performing a (sidelink) DRX operation is to basically operate as an active time for receiving a PSCCH/PSSCH of a peer UE.
- (Sidelink) DRX inactivity timer: a duration that extends the (sidelink) DRX onDuration duration, which is a duration in which a UE performing a (sidelink) DRX operation is to basically operate as an active time for receiving a PSCCH/PSSCH of a peer UE. For example, the (sidelink) DRX onDuration timer may be extended by the (sidelink) DRX inactivity timer duration. For example, when the UE receives PSCCH (first (1st) SCI and second (2nd) SCI) for a new TB from the peer UE or receives a new packet (a new PSSCH transmission), the UE may start the (sidelink) DRX inactivity timer to extend the (sidelink) DRX onDuration timer.
- (Sidelink) DRX HARQ RTT timer: a duration in which a UE performing a (sidelink) DRX operation operates in a sleep mode until receiving a retransmission packet transmitted by a peer UE (e.g., or a PSSCH allocation). For example, when the UE starts the (sidelink) DRX HARQ RTT timer, the UE may determine that the peer UE will not transmit a (sidelink) retransmission packet to the UE until the (sidelink) DRX HARQ RTT timer expires and may operate in the sleep mode during the timer (or may not perform monitoring of (sidelink) channels/signals transmitted by a Tx UE).
- (Sidelink) DRX retransmission timer: a duration in which a UE performing a (sidelink) DRX operation operates as an active time to receive a retransmission packet transmitted by a peer UE (e.g., or a PSSCH allocation). During the timer duration, the UE may monitor reception of a retransmission (sidelink) packet (e.g., or a PSSCH allocation) transmitted by the peer UE.

For example, names of timers (e.g., (sidelink) DRX onDuration timer, (sidelink) DRX inactivity timer, (sidelink) DRX HARQ RTT timer, (sidelink) DRX retransmission timer, etc.) are exemplary, and timers performing the same/similar function based on the content described in each timer may be considered as the same/similar timers regardless of their names.

For example, PSFCH reception may be performed. For example, the MAC entity may, for each PSSCH transmission, perform the HARQ-Based (Sidelink) RLF Detection procedure. For example, the MAC entity may, for each PSSCH transmission, if the PSSCH transmission occurs for a pair of Source Layer-2 ID and Destination Layer-2 ID corresponding to a PC5-RRC connection which has been established by upper layers, perform the HARQ-Based (Sidelink) RLF Detection procedure.

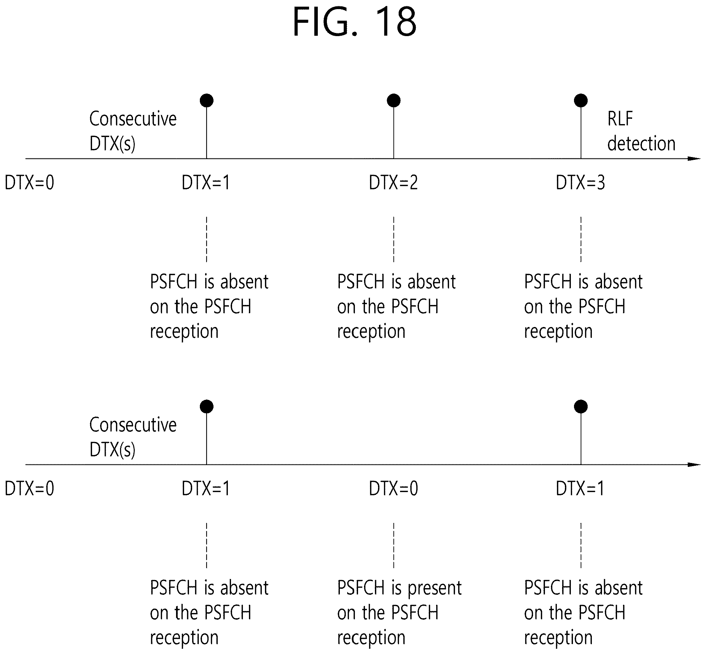

FIG. 18 shows a procedure related to RLF detection, based on an embodiment of the present disclosure. The embodiment of FIG. 18 may be combined with various embodiments of the present disclosure.

Referring to FIG. 18, for example, HARQ-based (Sidelink) RLF detection may be performed.

For example, when a transmitting UE does not receive a physical feedback channel (e.g., PSFCH) (e.g., HARQ ACK or HARQ NACK) from a receiving UE after transmitting a physical control channel/physical shared channel (e.g., PSCCH/PSSCH), the transmitting UE may increment a discontinuous transmission (DTX) count by 1 and may declare (or indicate or detect) (SL) RLF when the DTX count reaches a threshold. For example, when the (SL) RLF is declared (or indicated or detected) for a unicast link, the UE may release a PC5 RRC connection for which the (SL) RLF is declared (or indicated or detected) and may report (or indicate) to upper layers (e.g., a V2X layer) a PC5 link identifier related to the released PC5 RRC connection. For example, the UE may report (or indicate) to a base station that an (SL) RLF has occurred to the base station. For example, when the UE reports (or indicates), the UE may report (or indicate), together, unicast link information (e.g., a destination Layer-2 ID) for which the RLF has occurred and a cause related to the (SL) RLF (e.g., (SL) RLF).

For example, the HARQ-based (Sidelink) RLF detection procedure may be used to detect (Sidelink) RLF based on a number of consecutive DTX on PSFCH reception occasions for a PC5-RRC connection.

For example, RRC may configure the following parameter to control HARQ-based (Sidelink) RLF detection. For example, maximum DTX (e.g., (sl-)maxNumConsecutiveDTX) may be configured. For example, maximum DTX (e.g., (sl-)maxNumConsecutiveDTX) may indicate the maximum number of consecutive HARQ DTX before triggering (sidelink) RLF.

For example, the following UE variable may be used for HARQ-based (Sidelink) RLF detection. For example, DTX (e.g., numConsecutiveDTX), which is maintained for each PC5-RRC connection, may be configured.

For example, the (Sidelink) HARQ Entity may (re-)initialize numConsecutiveDTX to zero for each PC5-RRC connection which has been established by upper layers, if any, upon establishment of the PC5-RRC connection or (re)configuration of maximum DTX (e.g., (sl-)maxNumConsecutiveDTX). For example, as shown in FIG. 18, maximum DTX (e.g., (sl-)maxNumConsecutiveDTX) may be configured to 3. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (Sidelink) HARQ Entity may, for each PSFCH reception occasion associated to the PSSCH transmission, increment DTX (e.g., numConsecutiveDTX) by 1. For example, the (Sidelink) HARQ Entity may, for each PSFCH reception occasion associated to the PSSCH transmission, if PSFCH reception is absent on the PSFCH reception occasion, increment DTX (e.g., numConsecutiveDTX) by 1.

For example, the (Sidelink) HARQ Entity may, for each PSFCH reception occasion associated to the PSSCH transmission, indicate HARQ-based (Sidelink) RLF detection to RRC. For example, the (Sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX), indicate HARQ-based (Sidelink) RLF detection to RRC. For example, the (Sidelink) HARQ Entity may, for each PSFCH reception occasion associated to the PSSCH transmission, if PSFCH reception is absent on the PSFCH reception occasion, increment DTX (e.g., numConsecutiveDTX) by 1, if DTX (e.g., numConsecutiveDTX) reaches maximum DTX (e.g., (sl-)maxNumConsecutiveDTX), indicate HARQ-based (Sidelink) RLF detection to RRC. For example, as shown in FIG. 18, maximum DTX (e.g., (sl-)maxNumConsecutiveDTX) may be configured to 3. For example, as shown in FIG. 18, the (Sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) of 3, indicate HARQ-based (Sidelink) RLF detection to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (Sidelink) HARQ Entity may, for each PSFCH reception occasion associated to the PSSCH transmission, re-initialize DTX (e.g., numConsecutiveDTX) to zero. For example, the (Sidelink) HARQ Entity may, for each PSFCH reception occasion associated to the PSSCH transmission, if PSFCH reception is not absent on the PSFCH reception occasion (e.g., else for "if PSFCH reception is absent on the PSFCH reception occasion"), re-initialize DTX (e.g., numConsecutiveDTX) to zero.

In FIG. 18, maximum DTX (e.g., (sl-)maxNumConsecutiveDTX) is shown as being configured to 3, but is not limited thereto. For example, maximum DTX (e.g., (sl-)maxNumConsecutiveDTX) may be (re)configured to a value other than 3.

In a multi-carrier operation or carrier aggregation (CA), there may be a plurality of carriers related to a PC5-RRC connection. There may be a problem related to whether to detect an RLF and to indicate an RLF to upper layers only when a maximum of a number of DTXs is detected in some carriers.

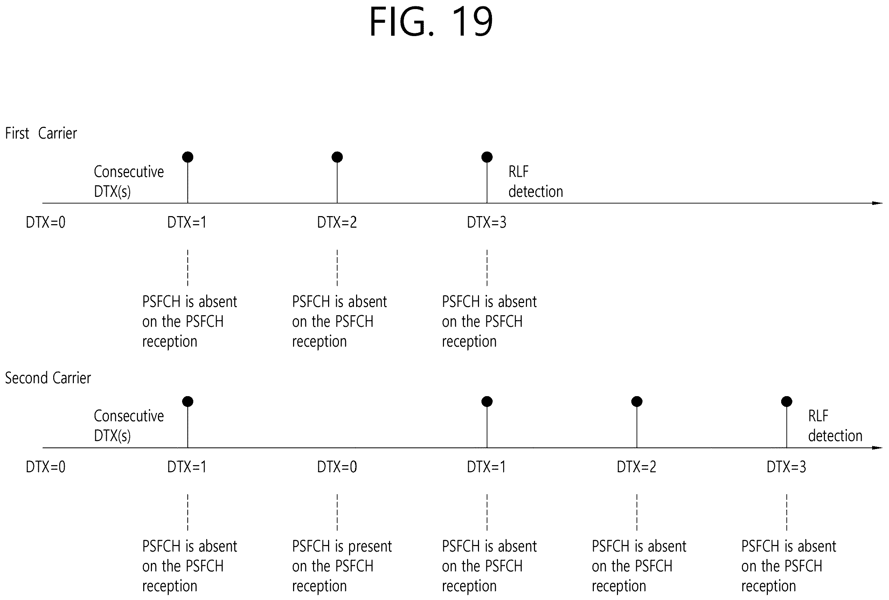

FIG. 19 shows a procedure related to RLF detection, based on an embodiment of the present disclosure. The embodiment of FIG. 19 may be combined with various embodiments of the present disclosure.

Referring to FIG. 19, for example, HARQ-based (Sidelink) RLF detection may be performed.

For example, a UE supporting a multi-channel operation (e.g., a multi-carrier operation or carrier aggregation) in LTE V2X may select a specific carrier for transmitting (sidelink) data and may select available resources in the selected carrier and may transmit the (sidelink) data through the selected resources and the carrier.

In the present disclosure, a PC5 RRC connection establishment operation of a UE supporting a multi-carrier operation may be proposed as follows.

In a (sidelink) multi-carrier operation, a PC5 RRC connection may be established or configured per (sidelink) carrier (e.g., or per (sidelink) HARQ entity mapped to a (sidelink) carrier). For example, a (sidelink) data transmission (e.g., an SL-SCH transmission) is managed at a (sidelink) HARQ entity (e.g., a flush of a HARQ buffer or a flush of a soft buffer of a (sidelink) process, management of (sidelink) processes, an allocation of a (sidelink) transport block to an unoccupied (sidelink) process, etc.), and, in a (sidelink) multi-carrier operation, one (sidelink) HARQ entity exists per carrier and a (sidelink) HARQ entity mapped to a (sidelink) carrier may perform management related to per-carrier (sidelink) data transmission (e.g., a flush of a HARQ buffer or a flush of a soft buffer of a (sidelink) process, management of (sidelink) processes, an allocation of a (sidelink) transport block to an unoccupied (sidelink) process, etc.). For example, it may be preferable that a PC5 RRC connection is maintained per (sidelink) carrier (e.g., or per (sidelink) HARQ entity mapped to a (sidelink) carrier).

When a (sidelink) UE and a peer (sidelink) UE establish a PC5 unicast link (e.g., or a PC5-S connection) between each other, a PC5 RRC connection may be established per (sidelink) carrier for each (sidelink) carrier configured for (sidelink) communication or in use for (sidelink) communication. A UE that has established a PC5 unicast link (e.g., or a PC5-S connection) may perform a (sidelink) capability negotiation process between each other through a PC5 RRC message exchange per (sidelink) carrier. For example, a UE that has established a PC5 unicast link (e.g., or a PC5-S connection) may perform a PC5 RRC reconfiguration process through a PC5 RRC message exchange per (sidelink) carrier (e.g., an RRC (sidelink) reconfiguration (e.g., RRCreconfigurationSidelink) message, an RRC (sidelink) reconfiguration complete message (e.g., RRCreconfigurationCompleteSidelink)) and may proceed with (sidelink) radio bearer configuration (e.g., SL DRB configuration) between each other. (Sidelink) radio bearer information may include allowed (sidelink) carrier index information mapped to the radio bearer. A (sidelink) radio bearer configured per (sidelink) carrier (e.g., a (sidelink) radio bearer configured through a PC5 RRC reconfiguration of a PC5 RRC connection per a specific (sidelink) carrier) may be used only for (sidelink) communication through the (sidelink) carrier (e.g., a carrier on which PC5 RRC reconfiguration is performed or an allowed (sidelink) carrier included in the (sidelink) radio bearer information configured in the PC5 RRC reconfiguration process).

For example, a UE may declare (or indicate or detect) an SL RLF per PC5 RRC connection established per (sidelink) carrier (e.g., the UE may declare (or indicate or detect) an SL RLF when a DTX in the (sidelink) carrier is detected by a pre-configured threshold or greater than or equal to the threshold. For example, the UE may declare (or indicate or detect) an SL RLF when, in the (sidelink) carrier, a HARQ NACK feedback in response to a PSCCH/PSSCH transmission is received by a pre-configured threshold or greater than or equal to the threshold.). When an SL RLF is declared (or indicated or detected) in a specific (sidelink) carrier, the UE may release a PC5 RRC connection of the carrier and may report (or indicate) to upper layers (e.g., a V2X layer) and a base station a PC5 link identifier related to the released PC5 RRC connection, (sidelink) carrier index information related to the released PC5 RRC connection, an SL RLF cause, and a Source Layer-2 ID/Destination Layer-2 ID.

For example, a UE may declare (or indicate or detect) a PC5 RRC reconfiguration failure per PC5 RRC connection established per (sidelink) carrier (e.g., the UE declares (or indicates or detects) a PC5 RRC reconfiguration failure when, in the (sidelink) carrier, the UE transmits an RRC (sidelink) reconfiguration message (e.g., RRCreconfigurationSidelink) and does not receive an RRC (sidelink) reconfiguration complete message (e.g., RRCreconfigurationCompleteSidelink) or an RRC (sidelink) reconfiguration failure message (e.g., RRCreconfigurationFailureSidelink) until a T400 timer expires). When a PC5 RRC reconfiguration failure is declared (or indicated or detected) in a specific (sidelink) carrier (e.g., considering that an SL RLF has occurred in the (sidelink) carrier), the UE may release a PC5 RRC connection of the carrier and may report (or indicate) to upper layers (e.g., a V2X layer) and a base station a PC5 link identifier related to the released PC5 RRC connection, (sidelink) carrier index information related to the released PC5 RRC connection, a PC5 RRC reconfiguration failure cause, and a Source Layer-2 ID/Destination Layer-2 ID.

In the present disclosure, an SL RLF operation of a UE supporting a multi-carrier operation may be proposed as follows.

In the present disclosure, it may be proposed that the UE maintains a numConsecutiveDTX parameter per (sidelink) carrier (e.g., or per (sidelink) HARQ entity of each (sidelink) carrier) and, when a transmitting UE has a DTX occurrence, the UE increments and maintains a DTX counting per carrier. For example, even when the transmitting UE has established a PC5 RRC connection commonly used for all carriers, it may be proposed that a numConsecutiveDTX count is maintained per (sidelink) carrier of the PC5 RRC connection to perform DTX counting. For example, when a numConsecutiveDTX count per carrier reaches a pre-configured threshold, an SL RLF may be declared (or indicated or detected) in the (sidelink) carrier. When an SL RLF is declared (or indicated or detected) in a specific (sidelink) carrier, the UE may report (or indicate) to upper layers (e.g., a V2X layer) and a base station (sidelink) carrier index information of the carrier, an SL RLF cause, and a Source Layer-2 ID/Destination Layer-2 ID. When the UE declares (or indicates or detects) an SL RLF in configured (sidelink) carriers or in operation or in all (sidelink) carriers in use, the UE may release a PC5 RRC connection and may report (or indicate) to upper layers (e.g., a V2X layer) and a base station a PC5 link identifier related to the released PC5 RRC connection, all (sidelink) carrier index information related to the released PC5 RRC connection, an SL RLF cause, and a Source Layer-2 ID/Destination Layer-2 ID.

In an embodiment of the present disclosure, the following (sidelink) RLF operation of a UE may be proposed.

For example, when parameters for a (sidelink) RLF operation per (sidelink) carrier or (sidelink) BWP or (sidelink) HARQ entity (e.g., (sl-)maxNumConsecutiveDTX: this field may indicate a maximum number of consecutive HARQ DTXs before triggering an (sidelink) RLF, a numConsecutiveDTX parameter: when a DTX occurs, the UE increments the numConsecutiveDTX parameter by 1 and, when the numConsecutiveDTX reaches (sl-)maxNumConsecutiveDTX, the UE may declare (or indicate or detect) an SL RLF for a PC5 RRC connection related to a (sidelink) carrier or a (sidelink) BWP or a (sidelink) HARQ entity) are configured (e.g., differently) or managed, an operation of the UE (e.g., a transmitting UE) may be proposed.

For example, a) the UE may accumulate counting of a plurality of SL RLF parameters (e.g., a numConsecutiveDTX) mapped to a plurality of (sidelink) carriers/SL BWPs/(sidelink) HARQ entities related to a PC5 RRC connection and, when accumulated counting reaches (sl-)maxNumConsecutiveDTX, may declare (or indicate or detect) an SL RLF for the PC5 RRC connection related to the plurality of (sidelink) carriers/SL BWPs/(sidelink) HARQ entities and may release the PC5 RRC connection. For example, the UE may use a minimum (e.g., or a maximum or (e.g., a weighted) average) value of a plurality of SL RLF parameters (e.g., (sl-)maxNumConsecutiveDTX) and may perform numConsecutiveDTX counting for a plurality of carriers/BWPs/(sidelink) HARQ entities and, when DTX counting reaches a minimum (e.g., or a maximum or (e.g., a weighted) average) value of (sl-)maxNumConsecutiveDTX, may declare (or indicate or detect) an SL RLF for the PC5 RRC connection related to the plurality of (sidelink) carriers/SL BWPs/(sidelink) HARQ entities and may release the PC5 RRC connection.

For example, b) among a plurality of (sidelink) carriers/SL BWPs/(sidelink) HARQ entities related to a PC5 RRC connection, when, for at least one carrier/SL BWP/(sidelink) HARQ entity, numConsecutiveDTX counting reaches (sl-)maxNumConsecutiveDTX or reaches a minimum (e.g., or a maximum or (e.g., a weighted) average) value of (sl-)maxNumConsecutiveDTX, the UE may declare (or indicate or detect) an SL RLF for the PC5 RRC connection related to the plurality of (sidelink) carriers and may release the PC5 RRC connection.

For example, c) when, for a plurality of (sidelink) carriers/SL BWPs/(sidelink) HARQ entities related to a PC5 RRC connection, each numConsecutiveDTX counting reaches (sl-)maxNumConsecutiveDTX or reaches a minimum (e.g., or a maximum or (e.g., a weighted) average) value of (sl-)maxNumConsecutiveDTX, the UE may declare (or indicate or detect) an SL RLF for the PC5 RRC connection related to the plurality of (sidelink) carriers/SL BWPs/(sidelink) HARQ entities and may release the PC5 RRC connection.

For example, when parameters for a (sidelink) RLF operation per (sidelink) carrier or (sidelink) BWP or (sidelink) HARQ entity (e.g., (sl-)maxNumConsecutiveDTX: this field may indicate a maximum number of consecutive HARQ DTXs before triggering an (sidelink) RLF, a numConsecutiveDTX parameter: when a DTX occurs, the UE increments the numConsecutiveDTX parameter by 1 and, when the numConsecutiveDTX reaches (sl-)maxNumConsecutiveDTX, the UE may declare (or indicate or detect) an SL RLF for a PC5 RRC connection related to a (sidelink) carrier or a (sidelink) BWP or a (sidelink) HARQ entity) are configured to the same value or managed in the same manner (e.g., or when SL RLF parameters (e.g., (sl-)maxNumConsecutiveDTX: this field may indicate a maximum number of consecutive HARQ DTXs before triggering an (sidelink) RLF, a numConsecutiveDTX parameter: when a DTX occurs, the UE increments the numConsecutiveDTX parameter by 1 and, when the numConsecutiveDTX reaches (sl-)maxNumConsecutiveDTX, the UE may declare (or indicate or detect) an SL RLF for a PC5 RRC connection related to a (sidelink) carrier or a (sidelink) BWP or a (sidelink) HARQ entity) commonly applied per (sidelink) unicast session (e.g., or PC5 RRC connection) are configured), an operation of the UE (e.g., a transmitting UE) may be proposed.

For example, a) the UE may use identically configured (sidelink) RLF parameters to commonly perform accumulation of numConsecutiveDTX counting for a plurality of (sidelink) carriers/SL BWPs/SL HARQ entities and, when numConsecutiveDTX counting reaches (sl-)maxNumConsecutiveDTX, may declare (or indicate or detect) an SL RLF for the PC5 RRC connection related to the plurality of (sidelink) carriers/SL BWPs/SL HARQ entities and may release the PC5 RRC connection.

For example, b) among a plurality of (sidelink) carriers/SL BWPs/SL HARQ entities related to a PC5 RRC connection, when at least one related numConsecutiveDTX counting reaches (sl-)maxNumConsecutiveDTX, the UE may declare (or indicate or detect) an SL RLF for the PC5 RRC connection related to the plurality of (sidelink) carriers/SL BWPs/SL HARQ entities and may release the PC5 RRC connection.

For example, c) when, for a plurality of (sidelink) carriers/SL BWPs/SL HARQ entities related to a PC5 RRC connection, all respective numConsecutiveDTX countings reach (sl-)maxNumConsecutiveDTX, the UE may declare (or indicate or detect) an SL RLF for the PC5 RRC connection related to the plurality of (sidelink) carriers/SL BWPs/SL HARQ entities and may release the PC5 RRC connection.

For example, the following (sidelink) RLF operation of a UE may be proposed.

For example, Operation 1) SL RLF parameters (e.g., (sl-)maxNumConsecutiveDTX, numConsecutiveDTX) may be configured and/or applied per (sidelink) carrier/SL BWP/(sidelink) HARQ entity, and a per-(sidelink) carrier/SL BWP/(sidelink) HARQ entity SL DTX counting operation (e.g., counting of numConsecutiveDTX) may be performed.

For example, Operation 2) although SL RLF parameters (e.g., (sl-)maxNumConsecutiveDTX, numConsecutiveDTX) are configured and/or applied per (sidelink) carrier/SL BWP/(sidelink) HARQ entity, (sidelink) DTX counting (e.g., counting of numConsecutiveDTX) may be jointly accumulated in a plurality of (e.g., or pre-configured) (sidelink) carriers/SL BWPs/(sidelink) HARQ entities.

For example, Operation 3) SL RLF parameters are commonly applied and/or configured for a plurality of (e.g., or pre-configured) (sidelink) carriers/SL BWPs/(sidelink) HARQ entities and SL DTX counting (e.g., counting of numConsecutiveDTX) may be commonly counted for the plurality of (e.g., or pre-configured) (sidelink) carriers/SL BWPs/(sidelink) HARQ entities.

In the present disclosure, for Operations 1), 2), and 3), the following conditions may be proposed as conditions for a UE to declare (or indicate or detect) a (sidelink) RLF.

For example, conditions for declaring (or indicating or detecting) a (sidelink) RLF may be as follows.
1) when a counted (sidelink) DTX (e.g., numConsecutiveDTX) counting number per pre-configured (sidelink) carrier/SL BWP/SL HARQ entity (e.g., related to a PC5 RRC connection) reaches a related (sl-)maxNumConsecutiveDTX threshold (e.g., Operation 1)
2) when, in all (sidelink) carriers/SL BWPs/SL HARQ entities (e.g., related to a PC5 RRC connection), each (sidelink) DTX counting (e.g., a numConsecutiveDTX) value reaches a related (sl-)maxNumConsecutiveDTX threshold (e.g., or when a (sidelink) DTX counting value reaches an (sl-)maxNumConsecutiveDTX threshold by jointly accumulating each counting of all (sidelink) carriers/SL BWPs/SL HARQ entities) (e.g., Operation 1, Operation 2)
3) when, among a plurality of (sidelink) carriers/SL BWPs/SL HARQ entities (e.g., related to a PC5 RRC connection), in a pre-configured number (e.g., "1") of (sidelink) carriers/SL BWPs/SL HARQ entities, each (sidelink) DTX counting value reaches a related (sl-)maxNumConsecutiveDTX threshold (e.g., or when, among a plurality of (sidelink) carriers/SL BWPs/SL HARQ entities, a numConsecutiveDTX counting value for a pre-configured number (e.g., "1") of (sidelink) carriers/SL BWPs/SL HARQ entities reaches a related (sl-)maxNumConsecutiveDTX threshold) (e.g., Operation 1, Operation 2, Operation 3)
   In the cases of Operation 2) and Operation 3), declaration (or indication or detection) of a (sidelink) RLF may be limited to a case where this event (e.g., a case where a numConsecutiveDTX counting value reaches a related (sl-)maxNumConsecutiveDTX threshold) occurs within a pre-configured timer; this timer may be started when a DTX counting is performed in one (sidelink) carrier/SL BWP/SL HARQ entity or when a (sidelink) RLF is declared (or indicated or detected).
4) a UE may commonly apply or perform DTX counting (e.g., a numConsecutiveDTX) for (sidelink) carriers/SL BWPs/SL HARQ entities (e.g., one or more) related to the same unicast service or a destination Layer-2 (Destination Layer-2) ID. For example, when a unicast session A and a unicast session B of the UE are the same unicast service, when a DTX occurs in the unicast session A, the UE may increase DTX counting by 1 in the unicast session B (e.g., or a PC5 RRC connection) as well as the unicast session A (e.g., or a PC5 RRC connection). For example, when a unicast session A and a unicast session B of the UE are the same unicast service, when an SL RLF is declared (or indicated or detected) in the unicast session A, the UE may also declare (or indicate or detect) an SL RLF in the unicast session B (e.g., or a PC5 RRC connection).

For example, when, for (sidelink) carriers/SL BWPs/SL HARQ entities related to a specific unicast service or a destination Layer-2 (Destination Layer-2) ID (e.g., under a situation where a plurality of services or destination Layer-2 (Destination Layer-2) IDs are operated for a unicast session), an SL DTX counting (e.g., a numConsecutiveDTX) value reaches a pre-configured threshold number of times, an SL RLF may be declared (or indicated or detected) for a related unicast session (e.g., or a related PC5 RRC connection).

In an embodiment of the present disclosure, a UE may select a set of carriers (e.g., or a concerned carrier set) used in a multi-carrier operation for a DTX-based RLF declaration (or indication or detection) and, when SL DTX counting (e.g., a numConsecutiveDTX) values in all carriers of the carrier set reach a pre-configured threshold number of times as in the proposed embodiment, may declare (or indicate or detect) an SL RLF and may release all unicast sessions (e.g., or all PC5 RRC connections) of the UE.

For example, a UE may select a set of carriers (e.g., or a concerned carrier set) used in a multi-carrier operation for a DTX-based RLF declaration (or indication or detection) as follows.

For example, 1) a set of all carriers with PSFCH configured among the carriers negotiated (e.g., capability negotiation) to be used for CA between UEs through PC5 RRC (e.g., capability negotiation) (e.g., A set of all carriers with PSFCH configured among the carriers negotiated to be used for CA between UEs through PC5 RRC (e.g., capability negotiation))

When establishing a unicast connection with a peer UE (e.g., during capability negotiation or during PC5 RRC reconfiguration), the UE may negotiate a set of carriers for multi-carrier (e.g., or carrier aggregation). The UE may select, as a set of carriers used in a multi-carrier operation for a DTX-based RLF declaration (or indication or detection) , a set of carriers including only carriers with PSFCH configured (e.g., or carriers including a resource pool with PSFCH configured) among the negotiated carriers.

For example, 2) a set of all carriers with PSFCH configured among the carriers configured for QoS flows of a pair of SRC/DST from the V2X layer (e.g., A set of all carriers with PSFCH configured among the carriers configured for QoS flows of a pair of SRC/DST from the V2X layer)

An AS layer (e.g., a MAC layer of the UE) of the UE may receive a set of carriers for multi-carrier (e.g., or carrier aggregation) mapped to a service (e.g., a pair of Source Layer-2 (Source Layer-2) ID/Destination Layer-2 (Destination Layer-2) ID, or a service related to a pair of Source Layer-2 (Source Layer-2) ID/Destination Layer-2 (Destination Layer-2) ID, or QoS flow(s) related to a pair of Source Layer-2 (Source Layer-2) ID/Destination Layer-2 (Destination Layer-2) ID) from an upper layer (e.g., a V2X layer). The AS layer may select, as a set of carriers used in a multi-carrier operation for a DTX-based RLF declaration (or indication or detection) , a set of carriers including only carriers with PSFCH configured (e.g., or carriers including a resource pool with PSFCH configured) among the carriers delivered from the upper layer.

For example, 3) a set of all carriers for which PSFCH is configured among multiple carriers selected (e.g., It is left to UE implementation how many carriers to select based on UE Capability) by the UE among the carrier set configured by the Network (e.g., A set of all carriers for which PSFCH is configured among multiple carriers selected (e.g., It is left to UE implementation how many carriers to select based on UE Capability) by the UE among the carrier set configured by the Network)

A UE may receive, from a base station, a set of carriers for multi-carrier (e.g., or carrier aggregation) mapped to a service (e.g., a pair of Source Layer-2 (Source Layer-2) ID/Destination Layer-2 (Destination Layer-2) ID, or a service related to a pair of Source Layer-2 (Source Layer-2) ID/Destination Layer-2 (Destination Layer-2) ID, or QoS flow(s) related to a pair of Source Layer-2 (Source Layer-2) ID/Destination Layer-2 (Destination Layer-2) ID). The UE may select, as a set of carriers used in a multi-carrier operation for a DTX-based RLF declaration (or indication or detection) , a set of carriers including only carriers with PSFCH configured (e.g., or carriers including a resource pool with PSFCH configured) among the carriers delivered from the base station (e.g., or the UE selects a set of carriers to be used for a multi-carrier operation among the carriers delivered from the base station and, among the selected carriers).

For example, in the present disclosure, a method of selecting and/or restricting a sidelink carrier/(SL) BWP/(SL) HARQ entity used for SL RLF-related DTX counting of a multi-carrier capable UE may be proposed as follows. A UE may perform SL DTX counting (e.g., numConsecutiveDTX) only for a sidelink carrier/(SL) BWP/(SL) HARQ entity that satisfies the following conditions among a plurality of sidelink carriers/(SL) BWPs/(SL) HARQ entities related to a unicast session or a PC5 RRC connection.

For example, 1) selecting a sidelink carrier/(SL) BWP/(SL) HARQ entity that is lower (e.g., or higher) than a pre-configured CBR threshold and performing SL DTX counting (e.g., numConsecutiveDTX). The CBR threshold may be configured per priority, per QoS profile (e.g., PDB, reliability), per SL radio bearer, or per logical channel.

For example, 2) a sidelink carrier/(SL) BWP/(SL) HARQ entity for which a PSFCH is configured.

For example, 3) a sidelink carrier/(SL) BWP/(SL) HARQ entity whose remaining CR value relative to a congestion-control related CR limit value is higher (e.g., or lower) than a pre-configured threshold.

For example, 4) a sidelink carrier/(SL) BWP/(SL) HARQ entity on which a pre-configured message (e.g., a PC5 RRC message related to RRC reconfiguration (sidelink) (e.g., RRCReconfiguration(Sidelink), RRCReconfigurationComplete(Sidelink), RRCReconfigurationFailure(Sidelink)), a PC5-S signal (e.g., a DCR/DCA message), or a sidelink message using SL SRB 0/SL SRB 1/SL SRB 2/SL SRB 3/SL SRB 4) is transmitted.

For example, 5) a sidelink carrier/(SL) BWP/(SL) HARQ entity on which a pre-configured sidelink channel/signal (e.g., SL-SSB) is (actually) transmitted.

For example, 6) (e.g., limited to a sidelink carrier/(SL) BWP/(SL) HARQ entity agreed between UEs, or a sidelink carrier/(SL) BWP/(SL) HARQ entity having the lowest, highest, or pre-configured index).

For example, 7) a sidelink carrier/(SL) BWP/(SL) HARQ entity on which packets whose sidelink priority or sidelink reliability is greater than or equal to a pre-configured threshold are transmitted.

For example, 8) a sidelink carrier/(SL) BWP/(SL) HARQ entity for which an LCH having a HARQ feedback enabled attribute (e.g., or an RB that provides HARQ-feedback-enabled data) is configured.

For example, 9) a sidelink carrier/(SL) BWP/(SL) HARQ entity on which PC5 RRC signaling (e.g., RRC reconfiguration (sidelink) (e.g., RRCReconfiguration(Sidelink)), RRC reconfiguration complete (sidelink) (e.g., RRCReconfigurationComplete(Sidelink)), RRC reconfiguration failure (sidelink) (e.g., RRCReconfigurationFailure(Sidelink))) is transmitted (e.g., or a sidelink carrier/(SL) BWP/(SL) HARQ entity on which a pre-configured PC5-S message (e.g., a DCR message) is transmitted).

For example, PSFCH reception may be performed. For example, the MAC entity may, for each PSSCH transmission, perform the HARQ-Based (Sidelink) RLF Detection procedure. For example, the MAC entity may, for each PSSCH transmission, if the PSSCH transmission occurs for a pair of Source Layer-2 ID and Destination Layer-2 ID corresponding to a PC5-RRC connection which has been established by upper layers, perform the HARQ-Based (Sidelink) RLF Detection procedure.

For example, the HARQ-based (Sidelink) RLF detection procedure may be used to detect (Sidelink) RLF based on a number of consecutive DTX on PSFCH reception occasions for a PC5-RRC connection. For example, for each carrier associated with a PC5-RRC connection, the HARQ-based (Sidelink) RLF detection procedure may be used to detect (Sidelink) RLF based on a number of consecutive DTX on PSFCH reception occasions for a PC5-RRC connection.

For example, RRC may configure the following parameter to control HARQ-based (Sidelink) RLF detection. For example, maximum DTX (e.g., (sl-)maxNumConsecutiveDTX) may be configured. For example, maximum DTX (e.g., (sl-)maxNumConsecutiveDTX) may indicate the maximum number of consecutive HARQ DTX before triggering (sidelink) RLF.

For example, the following UE variable may be used for HARQ-based (Sidelink) RLF detection. For example, DTX (e.g., numConsecutiveDTX), which is maintained for each PC5-RRC connection, may be configured. For example, DTX (e.g., numConsecutiveDTX), which is maintained per carrier per PC5-RRC connection, may be configured.

For example, the (Sidelink) HARQ Entity may (re-)initialize numConsecutiveDTX to zero for each PC5-RRC connection which has been established by upper layers, if any, upon establishment of the PC5-RRC connection or (re)configuration of maximum DTX (e.g., (sl-)maxNumConsecutiveDTX). For example, for each carrier associated with a PC5-RRC connection, the (Sidelink) HARQ Entity may (re-)initialize numConsecutiveDTX to zero for each PC5-RRC connection which has been established by upper layers, if any, upon establishment of the PC5-RRC connection or (re)configuration of maximum DTX (e.g., (sl-)maxNumConsecutiveDTX). For example, as shown in FIG. 19, maximum DTX (e.g., (sl-)maxNumConsecutiveDTX) may be configured to 3. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (Sidelink) HARQ Entity may, for each PSFCH reception occasion associated to the PSSCH transmission, increment DTX (e.g., numConsecutiveDTX) by 1. For example, for each carrier associated with a PC5-RRC connection, the (Sidelink) HARQ Entity may, for each PSFCH reception occasion associated to the PSSCH transmission, increment DTX (e.g., numConsecutiveDTX) by 1. For example, for each carrier associated with a PC5-RRC connection, the (Sidelink) HARQ Entity may, for each PSFCH reception occasion associated to the PSSCH transmission, if PSFCH reception is absent on the PSFCH reception occasion, increment DTX (e.g., numConsecutiveDTX) by 1. For example, for (SL) operation with shared spectrum channel access, UE may increase the DTX (e.g., numConsecutiveDTX) by 1 when the UE fails to detect the HARQ feedback on all the associated PSFCH resources.

For example, the (Sidelink) HARQ Entity may, for each PSFCH reception occasion associated to the PSSCH transmission, trigger the TX carrier (re-)selection procedure. For example, for each carrier associated with a PC5-RRC connection, the (Sidelink) HARQ Entity may, for each PSFCH reception occasion associated to the PSSCH transmission, trigger the TX carrier (re-)selection procedure. For example, for each carrier associated with a PC5-RRC connection, the (Sidelink) HARQ Entity may, for each PSFCH reception occasion associated to the PSSCH transmission, if more than one selected carrier is considered as the carriers for HARQ-based (Sidelink) RLF detection, trigger the TX carrier (re-)selection procedure. For example, for each carrier associated with a PC5-RRC connection, the (Sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) for a carrier applied for HARQ-based (Sidelink) RLF detection, trigger the TX carrier (re-)selection procedure. For example, for each carrier associated with a PC5-RRC connection, the (Sidelink) HARQ Entity may, for each PSFCH reception occasion associated to the PSSCH transmission, if more than one selected carrier is considered as the carriers for HARQ-based (Sidelink) RLF detection, if DTX (e.g., numConsecutiveDTX) reaches maximum DTX (e.g., (sl-)maxNumConsecutiveDTX) for a carrier applied for HARQ-based (Sidelink) RLF detection, trigger the TX carrier (re-)selection procedure. For example, in trigger the TX carrier (re-)selection procedure, the TX carrier (re-)selection procedure may be triggered as described in TX carrier (re)selection below. For example, in more than one selected carrier, more than one carrier may be selected as described in TX carrier (re)selection below. For example, as shown in FIG. 19, for a first carrier among carriers associated with a PC5-RRC connection, the (Sidelink) HARQ Entity may, for each PSFCH reception occasion associated to the PSSCH transmission, if the first carrier among more than one selected carrier is considered as the carriers for HARQ-based (Sidelink) RLF detection, if DTX (e.g., numConsecutiveDTX) reaches maximum DTX (e.g., (sl-)maxNumConsecutiveDTX) of 3 for the first carrier, which is a carrier applied for HARQ-based (Sidelink) RLF detection, trigger the TX carrier (re-)selection procedure. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (Sidelink) HARQ Entity may, for each PSFCH reception occasion associated to the PSSCH transmission, indicate HARQ-based (Sidelink) carrier failure to RRC. For example, for each carrier associated with a PC5-RRC connection, the (Sidelink) HARQ Entity may, for each PSFCH reception occasion associated to the PSSCH transmission, indicate HARQ-based (Sidelink) carrier failure to RRC. For example, for each carrier associated with a PC5-RRC connection, the (Sidelink) HARQ Entity may, for each PSFCH reception occasion associated to the PSSCH transmission, if more than one selected carrier is considered as the carriers for HARQ-based (Sidelink) RLF detection, indicate HARQ-based (Sidelink) carrier failure to RRC. For example, for each carrier associated with a PC5-RRC connection, the (Sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) for a carrier applied for HARQ-based (Sidelink) RLF detection, indicate HARQ-based (Sidelink) carrier failure to RRC. For example, for each carrier associated with a PC5-RRC connection, the (Sidelink) HARQ Entity may, for each PSFCH reception occasion associated to the PSSCH transmission, if more than one selected carrier is considered as the carriers for HARQ-based (Sidelink) RLF detection, if DTX (e.g., numConsecutiveDTX) reaches maximum DTX (e.g., (sl-)maxNumConsecutiveDTX) for a carrier applied for HARQ-based (Sidelink) RLF detection, indicate HARQ-based (Sidelink) carrier failure to RRC. For example, in more than one selected carrier, more than one carrier may be selected as described in TX carrier (re)selection below. For example, as shown in FIG. 19, for a first carrier among carriers associated with a PC5-RRC connection, the (Sidelink) HARQ Entity may, for each PSFCH reception occasion associated to the PSSCH transmission, if the first carrier among more than one selected carrier is considered as the carriers for HARQ-based (Sidelink) RLF detection, if DTX (e.g., numConsecutiveDTX) reaches maximum DTX (e.g., (sl-)maxNumConsecutiveDTX) of 3 for the first carrier, which is a carrier applied for HARQ-based (Sidelink) RLF detection, indicate HARQ-based (Sidelink) carrier failure to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (Sidelink) HARQ Entity may, for each PSFCH reception occasion associated to the PSSCH transmission, indicate HARQ-based (Sidelink) RLF detection to RRC. For example, for each carrier associated with a PC5-RRC connection, the (Sidelink) HARQ Entity may, for each PSFCH reception occasion associated to the PSSCH transmission, indicate HARQ-based (Sidelink) RLF detection to RRC. For example, for each carrier associated with a PC5-RRC connection, the (Sidelink) HARQ Entity may, for each PSFCH reception occasion associated to the PSSCH transmission, if more than one selected carrier is considered as the carriers for HARQ-based (Sidelink) RLF detection, indicate HARQ-based (Sidelink) RLF detection to RRC. For example, for each carrier associated with a PC5-RRC connection, the (Sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) for all carrier applied for HARQ-based (Sidelink) RLF detection, indicate HARQ-based (Sidelink) RLF detection to RRC. For example, for each carrier associated with a PC5-RRC connection, the (Sidelink) HARQ Entity may, for each PSFCH reception occasion associated to the PSSCH transmission, if more than one selected carrier is considered as the carriers for HARQ-based (Sidelink) RLF detection, if DTX (e.g., numConsecutiveDTX) reaches maximum DTX (e.g., (sl-)maxNumConsecutiveDTX) for all carrier applied for HARQ-based (Sidelink) RLF detection, indicate HARQ-based (Sidelink) RLF detection to RRC. For example, in more than one selected carrier, more than one carrier may be selected as described in TX carrier (re)selection below. For example, as shown in FIG. 19, for a first carrier and a second carrier, which are carriers associated with a PC5-RRC connection, the (Sidelink) HARQ Entity may, for each PSFCH reception occasion associated to the PSSCH transmission, if the first carrier and the second carrier, which are more than one selected carrier is considered as the carriers for HARQ-based (Sidelink) RLF detection, if DTX (e.g., numConsecutiveDTX) reaches maximum DTX (e.g., (sl-)maxNumConsecutiveDTX) of 3 for both the first carrier and the second carrier, which are carriers applied for HARQ-based (Sidelink) RLF detection, indicate HARQ-based (Sidelink) RLF detection to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (Sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX), indicate HARQ-based (Sidelink) RLF detection to RRC. For example, for each carrier associated with a PC5-RRC connection the (Sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX), indicate HARQ-based (Sidelink) RLF detection to RRC. For example, for each carrier associated with a PC5-RRC connection the (Sidelink) HARQ Entity may, for each PSFCH reception occasion associated to the PSSCH transmission, if more than one selected carrier is not considered as the carriers for HARQ-based (Sidelink) RLF detection (e.g., else for "if more than one selected carrier is considered as the carriers for HARQ-based (Sidelink) RLF detection"), if DTX (e.g., numConsecutiveDTX) reaches maximum DTX (e.g., (sl-)maxNumConsecutiveDTX), indicate HARQ-based (Sidelink) RLF detection to RRC. For example, in more than one selected carrier, more than one carrier may be selected as described in TX carrier (re)selection below. For example, as shown in FIG. 18, maximum DTX (e.g., (sl-)maxNumConsecutiveDTX) may be configured to 3. For example, as shown in FIG. 18, for each carrier associated with a PC5-RRC connection, the (Sidelink) HARQ Entity may, for each PSFCH reception occasion associated to the PSSCH transmission, if more than one selected carrier is not considered as the carriers for HARQ-based (Sidelink) RLF detection (e.g., else for "if more than one selected carrier is considered as the carriers for HARQ-based (Sidelink) RLF detection"), if DTX (e.g., numConsecutiveDTX) reaches maximum DTX (e.g., (sl-)maxNumConsecutiveDTX) of 3, indicate HARQ-based (Sidelink) RLF detection to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (Sidelink) HARQ Entity may, for each PSFCH reception occasion associated to the PSSCH transmission, re-initialize DTX (e.g., numConsecutiveDTX) to zero. For example, for each carrier associated with a PC5-RRC connection, the (Sidelink) HARQ Entity may, for each PSFCH reception occasion associated to the PSSCH transmission, re-initialize DTX (e.g., numConsecutiveDTX) to zero. For example, for each carrier associated with a PC5-RRC connection, the (Sidelink) HARQ Entity may, for each PSFCH reception occasion associated to the PSSCH transmission, if PSFCH reception is not absent on the PSFCH reception occasion (e.g., else for "if PSFCH reception is absent on the PSFCH reception occasion"), re-initialize DTX (e.g., numConsecutiveDTX) to zero.

By not indicating an RLF when a maximum of a number of DTXs is detected only in some carriers, by indicating an RLF even when a maximum of a number of DTXs is not detected in all of a plurality of carriers, it is possible to prevent a PC5-RRC connection from being released due to an RLF being indicated even though there is an available carrier in which a maximum of a number of DTXs is not detected. By indicating an RLF only when a maximum of a number of DTXs is detected in a plurality of carriers, by indicating an RLF even when a maximum of a number of DTXs is not detected in all of a plurality of carriers, it is possible to prevent a PC5-RRC connection from being released due to an RLF being indicated even though there is an available carrier in which a maximum of a number of DTXs is not detected. By releasing a PC5-RRC connection only when a maximum of a number of DTXs is detected in a plurality of carriers, it is possible to prevent a PC5-RRC connection from being released even though there is an available carrier in which a maximum of a number of DTXs is not detected.

For example, TX carrier (re-)selection may be performed.

For example, the MAC entity may consider a CBR of a carrier to be one measured by lower layers if CBR measurement results are available. For example, the corresponding index (e.g., (sl-)defaultTxConfigIndex) configured by upper layers if CBR measurement results are not available.

If the TX carrier (re-)selection is triggered for a (Sidelink) process, the MAC entity may consider the carrier as a candidate carrier for TX carrier (re-)selection for the concerned (sidelink) logical channel. If the TX carrier (re-)selection is triggered for a (Sidelink) process, the MAC entity may, if there is no selected (sidelink) grant on any carrier allowed for the (sidelink) logical channel where data is available as indicated by upper layers, consider the carrier as a candidate carrier for TX carrier (re-)selection for the concerned (sidelink) logical channel. If the TX carrier (re-)selection is triggered for a (Sidelink) process, the MAC entity may, for each carrier configured by upper layers associated with the concerned (sidelink) logical channel, consider the carrier as a candidate carrier for TX carrier (re-)selection for the concerned (sidelink) logical channel. If the TX carrier (re-)selection is triggered for a (Sidelink) process, the MAC entity may, if the CBR of the carrier is below CBR threshold ((sl-)threshCBR-FreqReselection) associated with the priority of the (sidelink) logical channel, consider the carrier as a candidate carrier for TX carrier (re-)selection for the concerned (sidelink) logical channel. If the TX carrier (re-)selection is triggered for a (Sidelink) process, the MAC entity may, taking into account of (sl-)HARQ-FeedbackEnabled for the (sidelink) logical channel, consider the carrier as a candidate carrier for TX carrier (re-)selection for the concerned (sidelink) logical channel. If the TX carrier (re-)selection is triggered for a (Sidelink) process, the MAC entity may, in the case of multiple resource pools configured on a carrier, which specific resource pool is used to determine the CBR of this carrier is up to UE implementation, consider the carrier as a candidate carrier for TX carrier (re-)selection for the concerned (sidelink) logical channel. If the TX carrier (re-)selection is triggered for a (Sidelink) process, the MAC entity may, taking into account of (sl-)HARQ-FeedbackEnabled for the (sidelink) logical channel, in the case of multiple resource pools configured on a carrier, which specific resource pool is used to determine the CBR of this carrier is up to UE implementation, consider the carrier as a candidate carrier for TX carrier (re-)selection for the concerned (sidelink) logical channel. If the TX carrier (re-)selection is triggered for a (Sidelink) process, the MAC entity may, if there is no selected (sidelink) grant on any carrier allowed for the (sidelink) logical channel where data is available as indicated by upper layers, for each carrier configured by upper layers associated with the concerned (sidelink) logical channel, if the CBR of the carrier is below CBR threshold ((sl-)threshCBR-FreqReselection) associated with the priority of the (sidelink) logical channel, taking into account of (sl-)HARQ-FeedbackEnabled for the (sidelink) logical channel, in the case of multiple resource pools configured on a carrier, which specific resource pool is used to determine the CBR of this carrier is up to UE implementation, consider the carrier as a candidate carrier for TX carrier (re-)selection for the concerned (sidelink) logical channel.

If the TX carrier (re-)selection is triggered for a (Sidelink) process, the MAC entity may select the carrier and the associated (e.g., associated with the carrier) pool of resources. If the TX carrier (re-)selection is triggered for a (Sidelink) process, the MAC entity may, if there is at least one selected (sidelink) grant on any carrier allowed for the (sidelink) logical channel where data is available as indicated by upper layers, (e.g., else for "if there is no selected (sidelink) grant on any carrier allowed for the (sidelink) logical channel where data is available as indicated by upper layers"), select the carrier and the associated (e.g., associated with the carrier) pool of resources. If the TX carrier (re-)selection is triggered for a (Sidelink) process, the MAC entity may, for each (sidelink) logical channel, if any, where data is available and that are allowed on the carrier for which Tx carrier (re-)selection is triggered, select the carrier and the associated (e.g., associated with the carrier) pool of resources. If the TX carrier (re-)selection is triggered for a (Sidelink) process, the MAC entity may, if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered, select the carrier and the associated (e.g., associated with the carrier) pool of resources. If the TX carrier (re-)selection is triggered for a (Sidelink) process, the MAC entity may, if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered, select the carrier and the associated (e.g., associated with the carrier) pool of resources. If the TX carrier (re-)selection is triggered for a (Sidelink) process, the MAC entity may, if there is at least one selected (sidelink) grant on any carrier allowed for the (sidelink) logical channel where data is available as indicated by upper layers, (e.g., else for "if there is no selected (sidelink) grant on any carrier allowed for the (sidelink) logical channel where data is available as indicated by upper layers"), if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered, select the carrier and the associated (e.g., associated with the carrier) pool of resources.

If the TX carrier (re-)selection is triggered for a (Sidelink) process, the MAC entity may consider the carrier as a candidate carrier for TX carrier (re-)selection, for each carrier configured by upper layers on which the (sidelink) logical channel is allowed. If the TX carrier (re-)selection is triggered for a (Sidelink) process, the MAC entity may, if there is at least one selected (sidelink) grant on any carrier allowed for the (sidelink) logical channel where data is available as indicated by upper layers, (e.g., else for "if there is no selected (sidelink) grant on any carrier allowed for the (sidelink) logical channel where data is available as indicated by upper layers"), consider the carrier as a candidate carrier for TX carrier (re-)selection, for each carrier configured by upper layers on which the (sidelink) logical channel is allowed. If the TX carrier (re-)selection is triggered for a (Sidelink) process, the MAC entity may, if data is not available, there is no (sidelink) logical channel that is allowed on the carrier for which Tx carrier (re-)selection is triggered, or if the CBR of the carrier is greater than or equal to threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered (e.g., else for "if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered"), consider the carrier as a candidate carrier for TX carrier (re-)selection, for each carrier configured by upper layers on which the (sidelink) logical channel is allowed. If the TX carrier (re-)selection is triggered for a (Sidelink) process, the MAC entity may consider the carrier as a candidate carrier for TX carrier (re-)selection, for each carrier configured by upper layers on which the (sidelink) logical channel is allowed. If the TX carrier (re-)selection is triggered for a (Sidelink) process, the MAC entity may, if the CBR of the carrier is below threshold ((sl-)threshCBR-FreqReselection) associated with the priority of the (sidelink) logical channel, consider the carrier as a candidate carrier for TX carrier (re-)selection, for each carrier configured by upper layers on which the (sidelink) logical channel is allowed. If the TX carrier (re-)selection is triggered for a (Sidelink) process, the MAC entity may, if the CBR of the carrier is below threshold ((sl-)threshCBR-FreqReselection) associated with the priority of the (sidelink) logical channel, consider the carrier as a candidate carrier for TX carrier (re-)selection, for each carrier configured by upper layers on which the (sidelink) logical channel is allowed. If the TX carrier (re-)selection is triggered for a (Sidelink) process, the MAC entity may, if there is at least one selected (sidelink) grant on any carrier allowed for the (sidelink) logical channel where data is available as indicated by upper layers, (e.g., else for "if there is no selected (sidelink) grant on any carrier allowed for the (sidelink) logical channel where data is available as indicated by upper layers"), if data is not available, there is no (sidelink) logical channel that is allowed on the carrier for which Tx carrier (re-)selection is triggered, or if the CBR of the carrier is greater than or equal to threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered (e.g., else for "if the CBR of the carrier is below threshold (e.g., (sl-)threshCBR-FreqKeeping) associated with priority of the (sidelink) logical channel, for each (sidelink) logical channel, if any, where data is available and that are allowed on the carrier for which Tx carrier (re-)selection is triggered"), if the CBR of the carrier is below threshold ((sl-)threshCBR-FreqReselection) associated with the priority of the (sidelink) logical channel, consider the carrier as a candidate carrier for TX carrier (re-)selection, for each carrier configured by upper layers on which the (sidelink) logical channel is allowed.

For example, the MAC entity may select one or more carrier(s) among the candidate carriers. For example, the MAC entity may select one or more carrier(s) and associated (e.g., associated with one or more carrier(s)) pool(s) of resources among the candidate carriers. For example, the MAC entity may select one or more carrier(s) among the candidate carriers with increasing order of CBR from the lowest CBR. For example, the MAC entity may select one or more carrier(s) and associated (e.g., associated with one or more carrier(s)) pool(s) of resources among the candidate carriers with increasing order of CBR from the lowest CBR. For example, the MAC entity may, if one or more carriers are considered as the candidate carriers for TX carrier (re-)selection, select one or more carrier(s) and associated (e.g., associated with one or more carrier(s)) pool(s) of resources among the candidate carriers with increasing order of CBR from the lowest CBR. For example, the MAC entity may, if Tx carrier (re-)selection is triggered, for each (sidelink) logical channel allowed on the carrier where data is available, select one or more carrier(s) and associated (e.g., associated with one or more carrier(s)) pool(s) of resources among the candidate carriers with increasing order of CBR from the lowest CBR. For example, the MAC entity may, if one or more carriers are considered as the candidate carriers for TX carrier (re-)selection, if Tx carrier (re-)selection is triggered, for each (sidelink) logical channel allowed on the carrier where data is available, select one or more carrier(s) and associated (e.g., associated with one or more carrier(s)) pool(s) of resources among the candidate carriers with increasing order of CBR from the lowest CBR.

For example, the MAC entity may select pool of resources (e.g., one pool of resources) configured with PSFCH resources among the pools of resources. For example, the MAC entity may, if (sl-)HARQ-FeedbackEnabled is set to enabled for the (sidelink) logical channel, select pool of resources (e.g., one pool of resources) configured with PSFCH resources among the pools of resources. For example, the MAC entity may, if (sl-)HARQ-FeedbackEnabled is set to enabled for the (sidelink) logical channel, select pool of resources (e.g., one pool of resources) configured with PSFCH resources among the pools of resources except the pool(s) in configuration related to discovery of a resource pool (e.g., (sl-)BWP-DiscPoolConfig or (sl-)BWP-DiscPoolConfigCommon), if configured. For example, the MAC entity may, select one or more carrier(s) and associated (e.g., associated with one or more carrier(s)) pool(s) of resources among the candidate carriers, if (sl-)HARQ-FeedbackEnabled is set to enabled for the (sidelink) logical channel, select pool of resources (e.g., one pool of resources) configured with PSFCH resources among the pools of resources except the pool(s) in configuration related to discovery of a resource pool (e.g., (sl-)BWP-DiscPoolConfig or (sl-)BWP-DiscPoolConfigCommon), if configured.

For example, the MAC entity may select any pool of resources among the pools of resources. For example, the MAC entity may, if (sl-)HARQ-FeedbackEnabled is set to disabled for the (sidelink) logical channel, select any pool of resources among the pools of resources. For example, the MAC entity may, if (sl-)HARQ-FeedbackEnabled is set to disabled for the (sidelink) logical channel, select any pool of resources among the pools of resources except the pool(s) in configuration related to discovery of a resource pool (e.g., (sl-)BWP-DiscPoolConfig or (sl-)BWP-DiscPoolConfigCommon), if configured. For example, the MAC entity may, select one or more carrier(s) and associated (e.g., associated with one or more carrier(s)) pool(s) of resources among the candidate carriers, if (sl-)HARQ-FeedbackEnabled is set to disabled for the (sidelink) logical channel, select any pool of resources among the pools of resources except the pool(s) in configuration related to discovery of a resource pool (e.g., (sl-)BWP-DiscPoolConfig or (sl-)BWP-DiscPoolConfigCommon), if configured.

For example, it may be left to UE implementation how many carriers to select based on UE capability.

For example, it may be left to UE implementation to determine the (sidelink) logical channels among the (sidelink) logical channels where data is available and that are allowed on the carrier for which Tx carrier (re-) selection is triggered.

In FIG. 19, maximum DTX (e.g., (sl-)maxNumConsecutiveDTX) is shown as being configured to 3, but is not limited thereto. For example, maximum DTX (e.g., (sl-)maxNumConsecutiveDTX) may be (re)configured to a value other than 3.

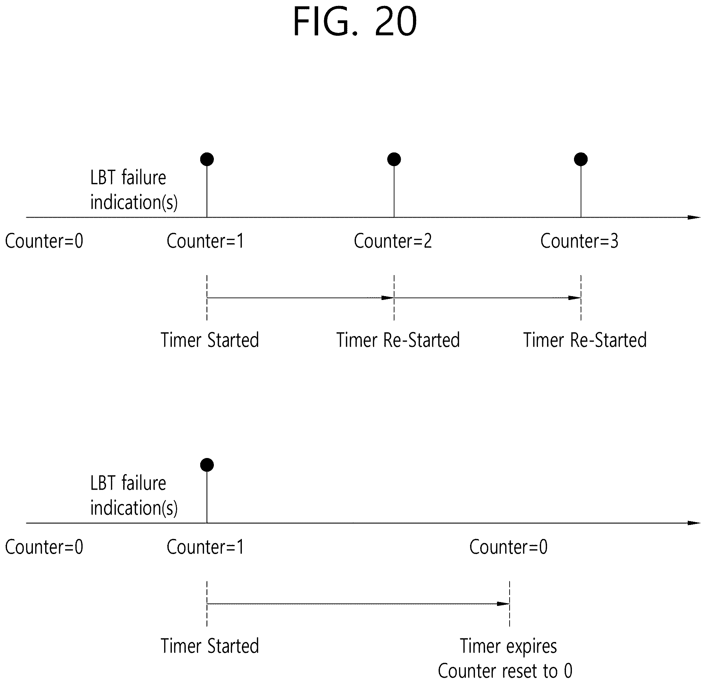

FIG. 20 shows a procedure related to LBT detection, based on an embodiment of the present disclosure. The embodiment of FIG. 20 may be combined with various embodiments of the present disclosure.

Referring to FIG. 20, (sidelink) LBT operation can be shown as follows.

In (SL-)U (unlicensed), the UE may first have to occupy a channel in a (sidelink) unlicensed band to transmit (SL) data. For example, to occupy a channel in the (sidelink) unlicensed band, the UE may perform LBT (e.g., Type 1 LBT: random backoff-based LBT) and perform a process of finding a channel in the unlicensed band that is not occupied by the UE. For example, a UE performing LBT, upon finding a channel not occupied by other UEs, may occupy the channel and perform (SL) data transmission. For example, if the UE fails the LBT process, the UE may readjust parameter values for performing LBT (e.g., adjusting contention window size) and continue the process of finding an unoccupied channel in the unlicensed band.

For example, the present disclosure may propose the following operation for resource (re-)selection when LBT (e.g., one-shot LBT or consistent LBT) fails (e.g., failure of the process of finding an unoccupied channel).

For example, when LBT (e.g., one-shot LBT or consistent LBT) failure for (sidelink) TB (transport block) transmission is detected, the UE may, without clearing a (sidelink) grant selected in an RB (e.g., resource block) set (e.g., or a (sidelink) resource pool) where the LBT failure occurred, reselect resources by replacing resources after the time point at which the LBT failure occurred with resources of another RB set (e.g., or a (sidelink) resource pool) in which the LBT failure has not occurred.

For example, in an embodiment of the present disclosure, when LBT (e.g., one-shot or consistent) failure is detected and there exists ongoing (sidelink) TB transmission in the RB set (e.g., or (sidelink) resource pool) where the LBT failure occurred, the UE may continue the related remaining (re-)transmission using resources reselected on another RB set (e.g., or (sidelink) resource pool) or may drop the ongoing (sidelink) TB.

For example, in an embodiment of the present disclosure, upon detecting LBT (e.g., one-shot LBT or consistent LBT) failure for (sidelink) TB transmission, the UE may clear the (sidelink) grant selected in the RB set (e.g., or (sidelink) resource pool) where the LBT failure occurred and may newly create a (sidelink) grant in another RB set (e.g., or (sidelink) resource pool) in which the LBT failure has not occurred.

For example, in an embodiment of the present disclosure, when LBT (e.g., one-shot or consistent) failure is detected and there exists ongoing TB transmission in the RB set (e.g., or (sidelink) resource pool) where the LBT failure occurred, the UE may continue the related remaining (re-)transmission using a (sidelink) grant created on another RB set (e.g., or (sidelink) resource pool) or may drop the ongoing (sidelink) TB.

For example, in an embodiment of the present disclosure, when LBT (e.g., one-shot or consistent) failure is detected for (sidelink) TB transmission, the UE may clear the (sidelink) grant selected in the RB set (e.g., or (sidelink) resource pool) where the LBT failure occurred and and/or may drop the ongoing (sidelink) TB transmission.

For example, in an embodiment of the present disclosure, upon occurrence of (e.g., one-shot or consistent) LBT failure for (sidelink) TB transmission, if resources reserved for the (sidelink) TB transmission have been selected but the reserved resources have not been indicated in SCI and transmitted to a peer UE, all resources reserved for the (sidelink) TB for which the (e.g., one-shot or consistent) LBT failure occurred (e.g., initial transmission resources and retransmission resources) may be reselected to other resources (of an RB set or resource pool in which the LBT failure has not occurred). For example, when (e.g., one-shot or consistent) LBT failure occurs for (sidelink) TB transmission and if resources reserved for the (sidelink) TB transmission have been selected and also indicated in SCI and transmitted to a peer UE, only resources for which the (e.g., one-shot or consistent) LBT failure occurred (e.g., only initial transmission resources or only retransmission resources) may be reselected to other resources (on an RB set or resource pool in which the LBT failure has not occurred).

For example, the present disclosure may be equally extended and applied when the UE performs an operation based on multiple consecutive slot transmission (MCSt) in (sidelink) where (sidelink) multiple consecutive slots are allocated as transmission resources (when MCSt resources are allocated).

For example, MCSt: (sidelink) slots with a gap less than or equal to a certain gap may be consecutively allocated as transmission resources for (sidelink) transmission, and the UE may transmit the same (sidelink) TB or multiple (sidelink) TBs using multiple consecutive slots. For example, the UE may perform LBT in the first slot and, for the (sidelink) TB transmitted over subsequent consecutive slots (consecutive slot(s) with a gap less than or equal to a certain gap), may transmit the (sidelink) TB without performing LBT. For example, by performing (sidelink) transmission based on MCSt, since (sidelink) data can be transmitted during gaps between consecutive slot(s) for (sidelink) transmission without performing LBT, there is an effect of reducing the overhead (e.g., performing LBT) of transmission operation in a (sidelink) unlicensed band.

For example, in an embodiment of the present disclosure, upon occurrence of (e.g., one-shot or consistent) LBT failure for (sidelink) TB transmission based on MCSt, if resources reserved for the (sidelink) TB transmission have been selected but the reserved resources have not been indicated in SCI and transmitted to a peer UE, all resources reserved for the (sidelink) TB for which the (e.g., one-shot or consistent) LBT failure occurred (e.g., initial transmission resources and retransmission resources or all resources reserved on the MCSt slots) may be reselected to other resources (of an RB set or resource pool in which the LBT failure has not occurred). For example, upon occurrence of (e.g., one-shot or consistent) LBT failure for (sidelink) TB transmission based on MCSt, if resources reserved for the (sidelink) TB transmission have been selected and also indicated in SCI and transmitted to a peer UE, only resources for which the (e.g., one-shot or consistent) LBT failure occurred (e.g., only initial transmission resources, only retransmission resources, or only resources on the MCSt slot(s) on which the LBT failure occurred) may be reselected to other resources (on an RB set or on a resource pool in which the LBT failure has not occurred).

For example, in an embodiment of the present disclosure, when a UE triggers or declares (sidelink) consistent LBT failure on a (sidelink) RB set (e.g., or a (sidelink) resource pool), if there is no (sidelink) RB set in a (sidelink) resource pool used or configured that has not experienced (sidelink) consistent LBT failure, the UE may trigger a resource reselection procedure and may reselect (sidelink) RB sets of a (sidelink) resource pool in which (sidelink) consistent LBT failure has not occurred, or (sidelink) LBT failure has not occurred, or (sidelink) LBT failure has occurred less than or equal to a pre-configured threshold, to perform (sidelink) data transmission.

For example, in an embodiment of the present disclosure, when a UE triggers or declares (sidelink) consistent LBT failure on a (sidelink) RB set (e.g., or a (sidelink) resource pool), if there is no (sidelink) RB set (e.g., or a (sidelink) resource pool) among (sidelink) resource pools (e.g., or (sidelink) RB sets) used or configured in which (sidelink) (consistent) LBT failure has not occurred, the UE may release all (sidelink) sessions (unicast or groupcast or broadcast) configured by the UE, declare (SL) RLF for all unicast sessions in the case of unicast, and perform a MAC reset procedure for MAC operations related to all unicast/groupcast/broadcast sessions.

For example, in an embodiment of the present disclosure, when a UE supporting multi-carrier operation triggers or declares (sidelink) consistent LBT failure on a (sidelink) RB set (e.g., or a (sidelink) resource pool) of a specific (sidelink) carrier, if there is no (sidelink) RB set (e.g., or a (sidelink) resource pool) among (sidelink) resource pools (e.g., or (sidelink) RB sets) used or configured on the specific (sidelink) carrier in which (sidelink) (consistent) LBT failure has not occurred, the UE may trigger a carrier reselection procedure for reselection of another (sidelink) carrier and may reselect a (sidelink) carrier in which there exists a (sidelink) RB set (e.g., or a (sidelink) resource pool) where (sidelink) (consistent) LBT failure has not occurred (e.g., or where (sidelink) LBT failure has occurred less than or equal to a pre-configured threshold).

For example, in an embodiment of the present disclosure, in the case of PSCCH/PSSCH or PSFCH transmission whose priority value (e.g., or (SL) CAPC) is greater than or equal to a pre-configured threshold, the UE may additionally perform (Type 1) LBT-based PSCCH/PSSCH or PSFCH transmission on a (sidelink) RB set (e.g., or a (sidelink) resource pool) where (sidelink) (consistent) LBT failure has been triggered (e.g., or declared).

For example, in an embodiment of the present disclosure, when the granularity for triggering or detecting (sidelink) consistent LBT failure is in units of a (sidelink) resource pool (e.g., or in units of an (SL) BWP), if only some RB sets in a (sidelink) resource pool (e.g., or an (SL) BWP) in which (sidelink) consistent LBT failure has been triggered (e.g., or declared) are RB sets related to the (SL) (consistent) LBT failure declaration, the remaining RB sets that are not related to the (SL) (consistent) LBT failure declaration may be used for (sidelink) grant creation or resource reselection. For example, when the granularity for triggering or detecting (sidelink) consistent LBT failure is in units of a (sidelink) resource pool (e.g., or in units of an (SL) BWP), if even some RB sets in a (sidelink) resource pool (e.g., or an (SL) BWP) in which (sidelink) consistent LBT failure has been triggered (e.g., or declared) are RB sets related to the (SL) (consistent) LBT failure declaration, the remaining RB sets that are not related to the (SL) (consistent) LBT failure declaration may not be used for (sidelink) grant creation or resource reselection.

For example, (sidelink specific) consistent LBT failure may be disclosed. For example, (SL-specific) consistent LBT failure detection and recovery procedure may be supported (e.g., for SL-U). For example, when the UE detects (SL-specific) consistent LBT failure, it may perform the actions (as specified in TS 38.321). For example, (SL-specific) consistent LBT failure detection may be per RB-set.

For example, a (SL) UE in RRC_CONNECTED may indicate (SL-specific) consistent LBT failure to the gNB using a (SL) MAC CE that indicates the RB set(s) where (SL-specific) consistent LBT failure was detected. For example, a (SL) UE (using mode 2 resource allocation) may trigger resource reselection and/or resource pool reselection upon (SL-specific) consistent LBT failure. For example, in such case, resources in failed RB set(s) may be excluded from resource (re)selection until consistent LBT failure on the RB set(s) is cancelled. For example, the UE may trigger (SL) RLF for all PC5-RRC connections when the UE has triggered (SL-specific) consistent LBT failure in all RB sets.

For example, the lower layer of the MAC entity may perform an LBT procedure. For example, the lower layer of the MAC entity may perform an LBT procedure, see TS 37.213 For example, the lower layer of the MAC entity may perform an LBT procedure, according to which a transmission is not performed by lower layers if the channel is identified as being occupied. For example, when lower layer of the MAC entity may perform an LBT procedure performs an LBT procedure before a transmission and the transmission is not performed, an (sidelink) LBT failure indication is sent to the MAC entity from lower layers of the MAC entity. For example, unless otherwise specified, when SL LBT procedure is performed for a transmission, actions as specified in this specification may be performed regardless of if an (SL) LBT failure indication is received from lower layers of the MAC entity. For example, when (SL) LBT is not performed by the lower layers of the MAC entity, (SL) LBT failure indication may not be received from lower layers of the MAC entity.

For example, (Sidelink) LBT failure detection and recovery procedure may be performed as follows.

For example, the MAC entity may be configured by RRC with a (SL) consistent LBT failure detection and recovery procedure. For example, (SL) consistent LBT failure is detected per RB set by counting (SL) LBT failure indication(s), for all (SL) transmissions, from the lower layers to the MAC entity.

For example, RRC may configure the following parameters in the (SL) LBT failure recovery configure (e.g., (sl-)lbt-FailureRecoveryConfig):
- (SL) LBT failure instance maximum count for the (SL) consistent LBT failure detection (e.g., (sl-)lbt-FailureInstanceMaxCount)
- (SL) LBT failure instance detection timer for the (SL) consistent LBT failure detection (e.g., (sl-)lbt-FailureDetectionTimer)

The following UE variable may be used for the (SL) consistent LBT failure detection procedure:
- LBT_COUNTER (e.g., SL_LBT_COUNTER) (e.g., per RB set): counter for (SL) LBT failure indication which is initially set to 0.

For example, for (SL) BWP (e,g,. configured with (sl-)lbt-FailureRecoveryConfig), the MAC entity may increment LBT _COUNTER for the RB set by 1. For example, for (SL) BWP (e,g,. configured with (sl-)lbt-FailureRecoveryConfig), the MAC entity may, if (SL) LBT failure indication has been received from lower layers for an RB set of the configured pool(s) of resources in the SL BWP, increment LBT _COUNTER for the RB set by 1.

For example, as shown in FIG. 20, for (SL) BWP (e,g,. configured with (sl-)lbt-FailureRecoveryConfig), the MAC entity may, if (SL) LBT failure indication has been received from lower layers for an RB set of the configured pool(s) of resources in the SL BWP, increment LBT _COUNTER for the RB set by 1.

For example, for (SL) BWP (e,g,. configured with (sl-)lbt-FailureRecoveryConfig), the MAC entity may start or restart the (sl-)lbt-FailureDetectionTimer for the RB set. For example, for (SL) BWP (e,g,. configured with (sl-)lbt-FailureRecoveryConfig), the MAC entity may start or restart the (sl-)lbt-FailureDetectionTimer, which is not running, for the RB set. For example, for (SL) BWP (e,g,. configured with (sl-)lbt-FailureRecoveryConfig), the MAC entity may, if (SL) LBT failure indication has been received from lower layers for an RB set of the configured pool(s) of resources in the SL BWP, start or restart the (sl-)lbt-FailureDetectionTimer for the RB set.

For example, as shown in FIG. 20, for (SL) BWP (e,g,. configured with (sl-)lbt-FailureRecoveryConfig), the MAC entity may, if (SL) LBT failure indication has been received from lower layers for an RB set of the configured pool(s) of resources in the SL BWP, start or restart the (sl-)lbt-FailureDetectionTimer for the RB set.

For example, for (SL) BWP (e,g,. configured with (sl-)lbt-FailureRecoveryConfig), the MAC entity may trigger (SL) consistent LBT failure for the RB set in the (SL) BWP. For example, for (SL) BWP (e,g,. configured with (sl-)lbt-FailureRecoveryConfig), the MAC entity may, if LBT _COUNTER is greater than or equal to a (sl-)lbt-FailureInstanceMaxCount, trigger (SL) consistent LBT failure for the RB set in the (SL) BWP.

For example, as shown in FIG. 20, for (SL) BWP (e,g,. configured with (sl-)lbt-FailureRecoveryConfig), the MAC entity may, if LBT _COUNTER is greater than or equal to 3 which is a (sl-)lbt-FailureInstanceMaxCount, trigger (SL) consistent LBT failure for the RB set in the (SL) BWP. For example, the (sl-)lbt-FailureInstanceMaxCount is not limited to 3. For example, the (sl-)lbt-FailureInstanceMaxCount may be configured to a value different from 3.

For example, for (SL) BWP (e,g,. configured with (sl-)lbt-FailureRecoveryConfig), the MAC entity may indicate SL (consistent) LBT failure based (Sidelink) RLF detection to RRC. For example, for (SL) BWP (e,g,. configured with (sl-)lbt-FailureRecoveryConfig), the MAC entity may, if consistent LBT failure has been triggered in all the RB sets of the configured pool(s) of resources in the SL BWP, indicate SL (consistent) LBT failure based (Sidelink) RLF detection to RRC.

For example, for (SL) BWP (e,g,. configured with (sl-)lbt-FailureRecoveryConfig), the MAC entity may set LBT _COUNTER to 0 for the RB set. For example, for (SL) BWP (e,g,. configured with (sl-)lbt-FailureRecoveryConfig), the MAC entity may, if all triggered SL consistent LBT failures are cancelled in a RB set, set LBT_COUNTER to 0 for the RB set. For example, for (SL) BWP (e,g,. configured with (sl-)lbt-FailureRecoveryConfig), the MAC entity may, if the (sl-)lbt-FailureDetectionTimer expires for a RB set, set LBT _COUNTER to 0 for the RB set.

For example, as shown in FIG. 20, for (SL) BWP (e,g,. configured with (sl-)lbt-FailureRecoveryConfig), the MAC entity may, if the (sl-)lbt-FailureDetectionTimer expires for a RB set, set LBT_COUNTER to 0 for the RB set.

For example, for (SL) BWP (e,g,. configured with (sl-)lbt-FailureRecoveryConfig), the MAC entity may set LBT _COUNTER to 0 for the RB set. For example, for (SL) BWP (e,g,. configured with (sl-)lbt-FailureRecoveryConfig), the MAC entity may, if (sl-)lbt-FailureDetectionTimer is reconfigured by upper layers, set LBT _COUNTER to 0 for the RB set. For example, for (SL) BWP (e,g,. configured with (sl-)lbt-FailureRecoveryConfig), the MAC entity may, if (sl-)lbt-FailureInstanceMaxCount is reconfigured by upper layers, set LBT_COUNTER to 0 for the RB set.

For example, the MAC entity may clear the selected (Sidelink) grant (if available). For example, the MAC entity may, if (Sidelink) consistent LBT failure is detected in some RB set(s) of the selected resource pool that spans multiple RB sets for the logical channel, if single carrier frequency is configured, clear the selected (Sidelink) grant (if available).

For example, the MAC entity may trigger the TX resource (re-)selection. For example, the MAC entity may, if (Sidelink) consistent LBT failure is detected in some RB set(s) of the selected resource pool that spans multiple RB sets for the logical channel, if single carrier frequency is configured, trigger the TX resource (re-)selection.

When a guard band between RB sets is not configured, it may not be necessary to trigger LBT failure only for the RB set in which LBT occurred. By incrementing LBT counting for other RB sets as well, not only for the RB set in which LBT occurred, based on LBT failure information, a more comprehensive approach to interference mitigation may be allowed.

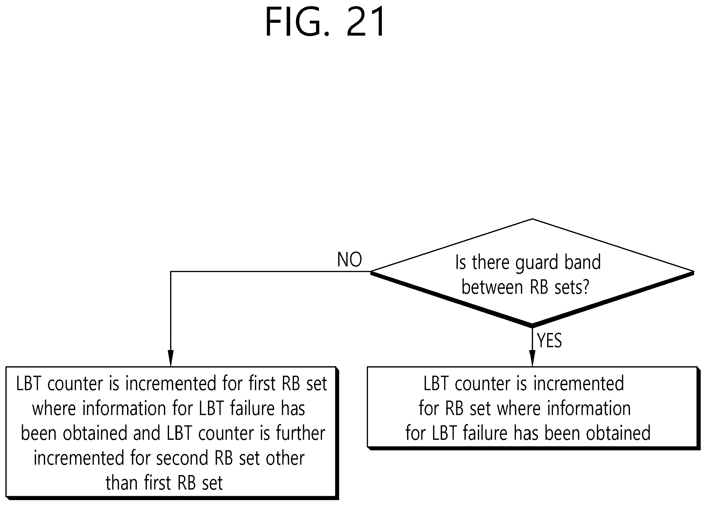

FIG. 21 shows a procedure related to LBT depending on whether a guard band is present, based on an embodiment of the present disclosure. The embodiment of FIG. 21 may be combined with various embodiments of the present disclosure.

Referring to FIG. 21, LBT counting may differ depending on the presence of a guard band. For example, if a guard band is present between RB sets, an LBT counter may be incremented for an RB set. For example, if a guard band is present between RB sets, an LBT counter may be incremented for the RB set for which information related to an LBT failure is obtained. For example, if a guard band is absent between RB sets, an LBT counter may be incremented for a first RB set and also for a second RB set different from the first RB set. For example, if a guard band is present between RB sets, an LBT counter may be incremented for a first RB set for which information related to an LBT failure is obtained, and an LBT counter may also be incremented for a second RB set different from the first RB set for which information related to an LBT failure is obtained.

For example, in an embodiment of the present disclosure, when a guard band is not configured between RB sets, if LBT failure counting is incremented by 1 in a specific RB set, the UE may increment (sidelink) LBT failure counting (e.g., LBT_COUNTER) by 1 in other RB sets as well (e.g., other RB sets may be limited to RB sets contiguous to the specific RB set whose LBT failure counting incremented by 1). For example, when this rule is applied, if (SL) consistent LBT failure occurs in a specific RB set, the UE may refrain from using, for (sidelink) grant creation or resource reselection, not only this RB set but also contiguous RB sets. For example, if the granularity of (SL) consistent LBT failure declaration is set to a (sidelink) resource pool or a (sidelink) BWP, the UE may refrain from performing (sidelink) grant creation or resource reselection using a (sidelink) resource pool or a (sidelink) BWP to which the contiguous RB set belongs. For example, LBT counter may be incremented per RB set. For example, SL consistent LBT failure may be detected per RB set. For example, a (SL) UE (using mode 2 resource allocation) may trigger resource reselection and/or resource pool reselection upon (SL-specific) consistent LBT failure. For example, in such case, resources in failed RB set(s) may be excluded from resource (re)selection until consistent LBT failure on the RB set(s) is cancelled. For example, the UE may trigger (SL) RLF for all PC5-RRC connections when the UE has triggered (SL-specific) consistent LBT failure in all RB sets. For example, for (SL) BWP (e,g,. configured with (sl-)lbt-FailureRecoveryConfig), the MAC entity may, if consistent LBT failure has been triggered in all the RB sets of the configured pool(s) of resources in the SL BWP, indicate SL (consistent) LBT failure based (Sidelink) RLF detection to RRC. For example, the MAC entity may clear the selected sidelink grant (if available). For example, the MAC entity may, if Sidelink consistent LBT failure is detected in some RB set(s) of the selected resource pool that spans multiple RB sets for the logical channel, if single carrier frequency is configured, clear the selected sidelink grant (if available).

When a guard band between RB sets is not configured, by incrementing LBT counting for other RB sets as well, not only for the RB set in which LBT occurred, based on LBT failure information, a more comprehensive approach to interference mitigation may be allowed. This may expand network performance by preventing potential LBT failures before LBT failures degrade quality of service, and may ensure a proactive posture to maintain communication reliability. When a guard band between RB sets is not configured, by incrementing LBT counting for other RB sets as well, not only for the RB set in which LBT occurred, based on LBT failure information, more dynamic spectrum management may be enabled, and thus this may allow the system to adjust its operation based on real-time information related to LBT failures in other RB sets. This may allow the spectrum to be used in a way that minimizes interference and, in particular, may optimize network performance in dense and complex environments. When a guard band between RB sets is not configured, by incrementing LBT failures beyond the RB set where LBT failures occurred, improved resilience in network-spectrum-related challenges may be secured. This may help maintain stable connectivity and may be particularly important for applications that require high reliability and minimal latency.

For example, in an embodiment of the present disclosure, when a UE triggers or declares (sidelink) consistent LBT failure, the UE may start a timer and may not use the (sidelink) RB set (or (sidelink) resource pool) in which (sidelink) consistent LBT failure has been triggered while the timer is running. For example, if the UE has received only a single RB set configured, the UE may, as an exception, perform LBT-based transmission of a (sidelink) consistent LBT failure MAC CE (e.g., (sidelink) consistent LBT Failure MAC CE) (e.g., or PSCC/PSSCH or PSFCH) using the (SL) RB set (or (sidelink) resource pool) in which the (SL) consistent LBT failure occurred, for transmission to a peer UE by indicating the reserved resources in SCI.

For example, transmission of a UE's (sidelink) consistent LBT failure MAC CE (e.g., (sidelink) consistent LBT Failure MAC CE) may be triggered only when there exists at least one RB set (e.g., or (sidelink) resource pool) in which (sidelink) (consistent) LBT failure has not occurred.

For example, in an embodiment of the present disclosure, when UE#A selects resources related to a newly created (SL) grant by considering its other (SL) grant-related resources (e.g., and/or CPE configuration values) or reserved resources of another UE#B (e.g., and/or CPE configuration values), the UE may be configured such that only data/messages whose priority (e.g., CAPC, (L1) PRIORITY) is greater than or equal to the priority linked with the CPE length value selected based on Rule A are selected in the LCP procedure and transmitted through the new (SL) grant-related resources, and/or only data/messages whose priority is greater than or equal to the priority of data/messages related to its other (SL) grant-related resources (e.g., and/or reserved resources of another UE#B) based on Rule B are selected in the LCP procedure (e.g., when preferentially selecting candidate resources on a slot contiguous before its other (SL) grant-related resources (e.g., and/or reserved resources of another UE#B)) (e.g., and/or only data/messages whose priority is lower than or equal to are selected in the LCP procedure (e.g., when preferentially selecting candidate resources on a slot contiguous after its other (SL) grant-related resources (e.g., and/or reserved resources of another UE#B))) to be transmitted through the new (SL) grant-related resources.

For example, Rule A) a form in which candidate CPE length values selectable according to priority (e.g., CAPC, (L1) PRIORITY) are limited and, if UE#A selects resources (for a newly created (SL) grant) that are FDM with UE#B's reserved resources (e.g., and/or overlap (e.g., in time and/or frequency resource region)), the same CPE length value as the CPE length value related to UE#B's reserved resources is applied. Through this, for example, from a system viewpoint, resource utilization/efficiency can be increased.

For example, Rule B) a form in which UE#A, for a newly created (SL) grant, (preferentially) selects candidate resources on a slot contiguous before (e.g., and/or after) its other (SL) grant-related resources (e.g., and/or reserved resources of another UE#B). Through this, for example, (e.g., by enabling a TX burst structure (e.g., between different TB transmissions)), the LBT overhead can be reduced.

For example, in (sidelink) unlicensed (SL-U), a transmitting UE performing (sidelink) communication may perform an LBT operation to occupy a channel in the unlicensed band. For example, if the UE succeeds in LBT, the UE may transmit packets on the occupied channel. For example, if LBT fails (e.g., when the channel is determined to be busy as a result of sensing performed during the sensing slot interval), the UE cannot perform (sidelink) transmission because the UE fails to occupy the channel in the unlicensed band. For example, the MAC layer of the transmitting UE may receive an indication of an (SL) LBT failure event from the physical layer when (SL) LBT failure is detected while performing LBT operation to occupy the channel in the unlicensed band.

For example, a UE may receive from a base station the following parameters for (SL) LBT failure management and may perform (SL) LBT failure recovery or (SL) LBT failure declaration operation.
- (sl-)lbt-failureInstanceMaxCount: when the UE detects an (SL) LBT failure, the UE may increment an LBT_COUNTER (e.g., SL_LBT_COUNTER) by 1, and if the UE detects (SL) LBT failures by (sl-)lbt-failurelnstanceMaxCount until (sl-)lbt-failureDetectionTimer expires, the UE may declare an (SL) LBT failure.
- (sl-)lbt-failureDetectionTimer: a timer started upon (SL) LBT failure detection, during which an (SL) LBT failure recovery process may be performed.

For example, when the MAC layer of the transmitting UE receives an (SL) LBT failure event from the physical layer (e.g., when the UE detects an (SL) LBT failure), the UE may start the (sl-)lbt-failureDetectionTimer and simultaneously increment the LBT _COUNTER (e.g., SL_LBT_COUNTER) by 1. For example, an (SL) LBT recovery process may be performed while the (sl-)lbt-failureDetectionTimer is running. For example, when the UE again detects an (SL) LBT failure while the (sl-)lbt-failureDetectionTimer is running, the UE may increment the LBT _COUNTER (e.g., SL_LBT_COUNTER) by 1. For example, if the LBT_COUNTER (e.g., SL_LBT _COUNTER) incremented due to (SL) LBT detection does not reach the threshold count ((sl-)lbt-failureInstanceMaxCount) before the (sl-)lbt-failureDetectionTimer expires, the UE may regard the (SL) LBT failure as recovered and may continue normal (sidelink) communication using the (sidelink) grant in use.

For example, if the LBT_COUNTER (e.g., SL_LBT_COUNTER) incremented due to (SL) LBT failure detection reaches the threshold count ((sl-)lbt-failureInstanceMaxCount) before the (sl-)lbt-failureDetectionTimer expires, the UE may declare a consistent (SL) LBT failure. For example, the MAC layer may declare consistent (SL) LBT failure per (sidelink) resource pool or per RB set. For example, if the UE has performed LBT for (SL) data transmission on a (sidelink) resource pool or an RB set in use and reaches consistent (SL) LBT failure, the UE may not declare (sidelink) radio link failure (RLF) but may switch to another (sidelink) resource pool or another RB set and re-perform LBT for (SL) data transmission. For example, if the UE experiences consistent (SL) LBT failure for all (sidelink) resource pools or all RB sets, the UE may declare (sidelink) RLF in the (sidelink) unlicensed band.

For example, in an embodiment of the present disclosure, when the MAC entity of the UE receives an (SL) LBT failure indication from the physical layer (e.g., a one-shot (SL) LBT failure or an (SL) LBT failure indication by a threshold (the threshold value may be configured by the base station or pre-configured as a value smaller than the threshold for declaring consistent (SL) LBT failure)), the UE may search for another RB set (e.g., by performing channel sensing to find an RB set with idle resources) having idle resources and may switch to the RB set and re-perform the LBT operation for (sidelink) data transmission on the switched RB set.

For example, in an embodiment of the present disclosure, the transmitting UE may make it such that the transmitting UE cannot use, for a certain time, a (sidelink) resource pool or an RB set in which consistent (SL) LBT failure occurred (e.g., by considering it as a de-prioritized (sidelink) resource pool or a de-prioritized RB set). For example, when the transmitting UE declares consistent (SL) LBT failure, the transmitting UE may refrain from using the (sidelink) resource pool or RB set in which consistent (SL) LBT failure occurred for a certain time and, after a certain time (e.g., after expiration), may use the (sidelink) resource pool or RB set again (e.g., after the timer expires, the transmitting UE may perform a resource selection operation again using the (sidelink) resource pool or RB set in which the previous consistent (SL) LBT failure occurred). For example, a time during which use of a (sidelink) resource pool or an RB set is prohibited due to (sidelink) consistent LBT failure (e.g., a timer for (SL) resource pool/RB set de-prioritization) may be configured by the base station to the UE (via an RRC message) or may be pre-configured. For example, during PC5 RRC reconfiguration, a time during which use of a (sidelink) resource pool or RB set is prohibited due to (sidelink) consistent LBT failure (e.g., a timer for (SL) resource pool/RB set de-prioritization) may be configured. For example, a time during which use of a (sidelink) resource pool or an RB set is prohibited due to (sidelink) consistent LBT failure (e.g., a timer for (SL) resource pool de-prioritization) may be configured per sidelink logical channel, or per PC5 QoS identifier (PQI), or per (sidelink) resource pool or RB set or (sidelink) BWP, or per QoS profile, or per destination layer-2 ID, or per source layer-2 ID/destination layer-2 ID pair (e.g., Source Layer-2 ID/Destination Layer-2 ID pair), or per (sl-)CAPC, or per sidelink priority. For example, in an embodiment of the present disclosure, when the transmitting UE declares consistent (SL) LBT failure, the transmitting UE may perform LBT operation to use the (sidelink) resource pool or RB set again after the time. For example, the LBT performed at this time may be performed by the transmitting UE for the purpose of checking whether the (sidelink) resource pool or RB set can be reused even if there is no (sidelink) data to transmit. For example, when the transmitting UE performs LBT (e.g., Type 1 LBT or Type 2A LBT or Type 2B LBT or Type 2C LBT) on a (sidelink) resource pool or an RB set in which (sidelink) consistent LBT failure occurred and detects LBT success by a threshold (e.g., a threshold N is a value that can be configured to be greater than or equal to 1; for example, the threshold N may be configured per (sidelink) logical channel, or per PC5 QoS identifier (PQI), or per (sidelink) resource pool or RB set, or per QoS profile, or per destination layer-2 ID), the UE may reuse the (sidelink) resource pool or RB set to perform (SL) data transmission.

For example, in an embodiment of the present disclosure, a transmitting UE may report to the base station information of a (sidelink) resource pool in which consistent (SL) LBT failure occurred (e.g., a (sidelink) resource pool index) or information of an RB set in which consistent (SL) LBT failure occurred (e.g., an RB set index). For example, in addition, when a transmitting UE reports to the base station information of a (sidelink) resource pool (e.g., a (sidelink) resource pool index) in which consistent (SL) LBT failure occurred or information of an RB set (e.g., an RB set index) in which consistent (SL) LBT failure occurred, the transmitting UE may report to the base station, together therewith, information of a switched (sidelink) resource pool (e.g., a (sidelink) resource pool index) or information of a switched RB set (e.g., an RB set index).

For example, in an embodiment of the present disclosure, when the transmitting UE declares consistent (SL) LBT failure per RB set or per (sidelink) resource pool or per (sidelink) BWP, the UE may start a timer (e.g., a timer for (SL) resource pool/RB set de-prioritization). For example, when the transmitting UE declares consistent (SL) LBT failure for all configured (e.g., or used) RB sets or all configured (e.g., or used) (sidelink) resource pools or all configured (e.g., or used) (sidelink) BWPs, the UE may start a timer (e.g., a timer for (SL) resource pool/RB set de-prioritization).

For example, in an embodiment of the present disclosure, even if the transmitting UE declares consistent (SL) LBT failure in (all) RB sets or (all) (sidelink) resource pools or (all) (sidelink) BWPs, after the timer (e.g., a timer for (SL) resource pool/RB set de-prioritization) expires, the UE may declare (sidelink) RLF for all established unicast links (e.g., or all established PC5 RRC connections) and may release all established (sidelink) unicast links or all established PC5 RRC connections.

For example, in an embodiment of the present disclosure, while a timer (e.g., a timer for (SL) resource pool/RB set de-prioritization) is running, the transmitting UE may either keep use pending without releasing the selected (e.g., or used) (sidelink) grant or may release the selected (e.g., or used) (sidelink) grant.

For example, in an embodiment of the present disclosure, when the transmitting UE receives (sidelink) data (e.g., PSCCH/PSSCH) from a peer UE and the CBR is less than or equal to a threshold (e.g., or when the CBR at the time of (sidelink) consistent LBT failure declaration is less than or equal to a pre-configured offset), the UE may reuse a pending RB set (e.g., or a (sidelink) resource pool).

For example, embodiments of the present disclosure may be solutions applicable and extendable to a case where the UE is in RRC CONNECTED with the base station, a case where the UE is in RRC idle with the base station, a case where the UE is in RRC INACTIVE with the base station, and a case where the UE is out of coverage with the base station.

For example, in an embodiment of the present disclosure, when the UE triggers (sidelink) consistent LBT failure due to (sidelink) LBT failure reaching a pre-configured threshold count, the UE may cancel the triggered (sidelink) consistent LBT failure and perform normal (sidelink) communication in a (sidelink) unlicensed band when the following conditions are satisfied.

For example, 1) due to success of Uu LBT (e.g., a channel access procedure for the UE's uplink data to the base station or uplink MAC CE (e.g., a MAC CE for reporting (sidelink) consistent LBT failure) or PUCCH or RRC message transmission) or due to decoding success by the base station of the UE's uplink message (e.g., the UE's uplink data to the base station or uplink MAC CE (e.g., a MAC CE indicating (sidelink) consistent LBT failure to the base station) or PUCCH or RRC message transmission), the UE receives a newly configured mode-1 (sidelink) grant or a newly configured RB set/resource pool related to at least one (or greater than or equal to a pre-configured threshold number of) resource block sets in which (sidelink) consistent LBT failure has not occurred.

For example, 2) due to success of Uu LBT (e.g., a channel access procedure for the UE's uplink data to the base station or uplink MAC CE (e.g., a MAC CE for reporting (sidelink) consistent LBT failure) or PUCCH or RRC message transmission) or due to decoding success by the base station of the UE's uplink message (e.g., the UE's uplink data to the base station or uplink MAC CE (e.g., a MAC CE indicating (sidelink) consistent LBT failure to the base station) or PUCCH or RRC message transmission), the UE receives a newly configured mode-1 (sidelink) grant or a newly configured RB set/resource pool related to at least one (or greater than or equal to a pre-configured threshold number of) resource block sets in which (sidelink) consistent LBT failure has not occurred and clears the mode-1 or mode-2 (sidelink) grant related to the RB set/resource pool in which consistent (SL) LBT occurred.

For example, 3) due to success of Uu LBT (e.g., a channel access procedure for the UE's uplink data to the base station or uplink MAC CE (e.g., a MAC CE for reporting (sidelink) consistent LBT failure) or PUCCH or RRC message transmission) or due to decoding success by the base station of the UE's uplink message (e.g., the UE's uplink data to the base station or uplink MAC CE (e.g., a MAC CE indicating (sidelink) consistent LBT failure to the base station) or PUCCH or RRC message transmission), the UE receives a newly configured mode-1 (sidelink) grant or a newly configured RB set/resource pool related to at least one (or greater than or equal to a pre-configured threshold number of) resource block sets in which (sidelink) consistent LBT failure has not occurred and clears the mode-1 or mode-2 (sidelink) grant related to the RB set/resource pool in which consistent (SL) LBT occurred or flushes a HARQ buffer related to MAC PDU transmission of the mode-1 or mode-2 (sidelink) grant related to the RB set/resource pool in which consistent (SL) LBT occurred.

For example, 4) when (sidelink) consistent LBT failure has been triggered and the UE transmits a Uu MAC CE for reporting consistent (SL) LBT failure to the base station, if the base station allocates a mode-1 grant based on a (sidelink) resource pool or a (sidelink) resource block set in which (sidelink) consistent LBT failure has not occurred (e.g., at least one or greater than or equal to a pre-configured threshold number), the UE may cancel the triggered (sidelink) consistent LBT failure.

For example, 5) when (sidelink) consistent LBT failure has been triggered and the UE transmits a Uu MAC CE for reporting consistent (SL) LBT failure to the base station and receives from the base station reconfiguration or reallocation of a (sidelink) resource pool or a (sidelink) resource block set (at least one or greater than or equal to a pre-configured threshold number) in which (sidelink) consistent LBT failure has not occurred, the UE may cancel the triggered (sidelink) consistent LBT failure.

For example, 6) when an (SL) RLF occurs for a PC5 RRC connection (e.g., or a unicast link) in which (sidelink) consistent LBT failure has occurred (e.g., or been triggered).

For example, 7) when a MAC reset is triggered for a PC5 RRC connection (e.g., or a unicast link) or a groupcast session/broadcast session in which (sidelink) consistent LBT failure has occurred (e.g., or been triggered).

For example, 8) when an (SL) BWP in which (sidelink) consistent LBT failure has occurred (e.g., or been triggered) is deactivated.

For example, 9) when carrier reselection is triggered for a (sidelink) carrier in which (sidelink) consistent LBT failure has occurred (e.g., or been triggered) in multi-carrier operation.

For example, 10) when a beam failure recovery procedure is triggered for beam-related resources in which (sidelink) consistent LBT failure has occurred (e.g., or been triggered) in (sidelink) FR2 operation (e.g., or when the beam failure recovery process fails or when the beam failure recovery process succeeds).

For example, 11) when a PC5 RRC reconfiguration procedure is triggered for a PC5 RRC connection (e.g., or a unicast link) in which (sidelink) consistent LBT failure has occurred (e.g., or been triggered) (e.g., or when reconfiguration of the PC5 RRC connection in which (sidelink) consistent LBT failure has occurred is completed).

For example, 12) when a (sidelink) RB set or a (sidelink) resource pool or an (SL) BWP related to a triggered (sidelink) consistent LBT failure is replaced by a new (sidelink) RB set (e.g., an RB set in which (sidelink) (consistent) LBT failure has not occurred) or a (sidelink) resource pool (e.g., a (sidelink) resource pool in which (sidelink) (consistent) LBT failure has not occurred) or a (sidelink) BWP (e.g., an (SL) BWP in which (sidelink) (consistent) LBT failure has not occurred).

For example, 13) when a resource reselection procedure is triggered for a (sidelink) resource related to the triggered (sidelink) consistent LBT failure (e.g., or when the resource reselection procedure is completed).

For example, 14) when a resource reselection procedure is triggered for a (sidelink) resource related to the triggered (sidelink) consistent LBT failure due to re-evaluation or pre-emption or congestion control or prioritization between uplink/(sidelink) (e.g., or when the resource reselection procedure is completed).

For example, 15) when configuration information for recovery of (sidelink) consistent LBT failure (e.g., (sl-)lbt-failureInstanceMaxCount, (sl-)lbt-failureDetectionTimer) is reconfigured.

For example, 16) when the UE completes, successfully, transmission of an (SL) consistent LBT failure MAC CE (e.g., (SL) consistent LBT failure MAC CE) to at least a pre-configured number (e.g., 1) of peer UEs or only to peer UEs related to data transmission whose (SL) CAPC priority or (sidelink) priority or L1 priority is greater than or equal to a pre-configured threshold level (e.g., or less than or equal to a threshold level), the UE may cancel the triggered (sidelink) consistent LBT failure procedure.

For example, 17) the UE may perform transmission of an (SL) consistent LBT failure MAC CE (e.g., (SL) consistent LBT failure MAC CE) only to at least a pre-configured number (e.g., 1) of peer UEs or only to peer UEs related to data transmission whose (SL) CAPC priority or (sidelink) priority or L1 priority is greater than or equal to a pre-configured threshold level (e.g., or less than or equal to a threshold level). For example, when this rule is applied, the UE may cancel the triggered (sidelink) consistent LBT failure procedure only when the (SL) consistent LBT failure MAC CE has been successfully transmitted to all of those peer UEs.

For example, the present disclosure may propose the following (sidelink) unlicensed-band operations.

For example, when the base station successfully decodes the UE's uplink message (e.g., an uplink MAC CE (e.g., a MAC CE indicating (sidelink) consistent LBT failure to the base station)), the base station may configure to the UE a newly configured mode-1 (sidelink) grant or a newly configured RB set/resource pool related to at least one (or greater than or equal to a pre-configured threshold number of) resource block sets in which (sidelink) consistent LBT failure has not occurred.

For example, when the UE transmits an uplink message (e.g., an uplink MAC CE (e.g., a MAC CE indicating (sidelink) consistent LBT failure to the base station)) to the base station and receives from the base station a newly configured mode-1 (sidelink) grant or a newly configured RB set/resource pool related to at least one (or greater than or equal to a pre-configured threshold number of) resource block sets in which (sidelink) consistent LBT failure has not occurred, the UE may clear the mode-1 or mode-2 (sidelink) grant related to the RB set/resource pool in which consistent (SL) LBT occurred.

For example, when the UE transmits an uplink message (e.g., an uplink MAC CE (e.g., a MAC CE indicating (sidelink) consistent LBT failure to the base station)) to the base station and receives from the base station a newly configured mode-1 (sidelink) grant or a newly configured RB set/resource pool related to at least one (or greater than or equal to a pre-configured threshold number of) resource block sets in which (sidelink) consistent LBT failure has not occurred, the UE may clear the mode-1 or mode-2 (sidelink) grant related to the RB set/resource pool in which consistent (SL) LBT occurred and and/or may flush a HARQ buffer related to MAC PDU transmission of the mode-1 or mode-2 (sidelink) grant related to the RB set/resource pool in which consistent (SL) LBT occurred.

For example, when the UE transmits an uplink message (e.g., an uplink MAC CE (e.g., a MAC CE indicating (sidelink) consistent LBT failure to the base station)) to the base station and receives from the base station a newly configured mode-1 (sidelink) grant or a newly configured RB set/resource pool related to at least one (or greater than or equal to a pre-configured threshold number of) resource block sets in which (sidelink) consistent LBT failure has not occurred, the UE may cancel the triggered consistent (SL) LBT failure and may perform normal (sidelink) communication in a (sidelink) unlicensed band.

For example, in an embodiment of the present disclosure, when the UE declares (sidelink) consistent LBT failure, the UE may refrain from using the (sidelink) resource pool or RB set in which (sidelink) consistent LBT failure occurred for a certain time and may use the (sidelink) resource pool or RB set again after a certain time (e.g., after expiration) (e.g., after the timer expires, the transmitting UE may perform a resource selection operation again using the (sidelink) resource pool or RB set in which the previous (sidelink) consistent LBT failure occurred). For example, a time during which use of a (sidelink) resource pool or RB set is prohibited due to (sidelink) consistent LBT failure (e.g., a timer for (SL) resource pool/RB set de-prioritization) may be configured by the base station to the UE (via an RRC message) or may be pre-configured. For example, when a UE (e.g., a mode-2 UE) fails Uu LBT and thus fails to transmit a Uu consistent LBT failure MAC CE (e.g., a Uu consistent LBT failure MAC CE) for reporting (sidelink) consistent LBT failure to the base station, or when Uu LBT of the Uu consistent LBT failure MAC CE (e.g., a Uu consistent LBT failure MAC CE) for reporting (sidelink) consistent LBT failure succeeds and the MAC CE is successfully transmitted but a response is not received from the base station, while the timer is running, the UE may refrain from using resources of the RB set in which (sidelink) consistent LBT failure occurred or resources belonging to the (sidelink) resource pool in which (sidelink) consistent LBT failure occurred and, after the timer expires, may allow use of the resources of the RB set in which (sidelink) consistent LBT failure occurred or the resources belonging to the (sidelink) resource pool in which (sidelink) consistent LBT failure occurred. For example, when a UE (e.g., a mode-1 UE) fails Uu LBT and thus fails to transmit a Uu consistent LBT failure MAC CE (e.g., a Uu consistent LBT failure MAC CE) for reporting (sidelink) consistent LBT failure to the base station, or when Uu LBT of the Uu consistent LBT failure MAC CE (e.g., a Uu consistent LBT failure MAC CE) for reporting (sidelink) consistent LBT failure succeeds and the MAC CE is successfully transmitted but a response is not received from the base station, while the timer is running, the UE may refrain from using a (sidelink) grant of the RB set in which (sidelink) consistent LBT failure occurred or a (sidelink) grant of the (sidelink) resource pool in which (sidelink) consistent LBT failure occurred and, after the timer expires, may allow use of a (sidelink) grant of the RB set in which (sidelink) consistent LBT failure occurred or a (sidelink) grant of the (sidelink) resource pool in which (sidelink) consistent LBT failure occurred. For example, when the UE fails Uu LBT and thus fails to transmit a Uu consistent LBT failure MAC CE (e.g., a Uu consistent LBT failure MAC CE) for reporting (sidelink) consistent LBT failure to the base station, or when Uu LBT of the Uu consistent LBT failure MAC CE (e.g., a Uu consistent LBT failure MAC CE) for reporting (sidelink) consistent LBT failure succeeds and the MAC CE is successfully transmitted but a response is not received from the base station, the UE may not cancel the triggered (sidelink) consistent LBT failure while the timer is running and may cancel the triggered (sidelink) consistent LBT failure when the timer expires. For example, when the above rule is applied, it may be interpreted that the UE clears remaining retransmission resources related to the (sidelink) grant, or that the UE transmits ACK (e.g., or NACK) on a PUCCH related to the (sidelink) grant. The operation of the present disclosure may be applied to all (sidelink) unicast/groupcast/broadcast operations.

In an embodiment of the present disclosure, "channel" may be applied by replacing "carrier" or "resource block set of a specific carrier" or "band".

In the present disclosure, multi-carrier may be interpreted as carrier aggregation (CA).

In (sidelink) multi-carrier operation, to guarantee HARQ-feedback-enabled MAC PDU transmission, the base station may be expected by the UE to configure PSFCH resources on at least one of exceptional pool(s) (e.g., or normal TX pool(s) or normal RX pool(s)) on at least one of the sidelink carrier/(SL) BWP/(SL) HARQ entities mapped to the same unicast service or the same source layer-2 ID and destination layer-2 ID pair (e.g., or the same groupcast/broadcast service or the same destination layer-2 ID) among multiple (sidelink) carriers/(SL) BWPs/(SL) HARQ entities. The present disclosure is not limited thereto.

When forming a unicast session or a groupcast or a broadcast session that performs HARQ-feedback-enabled MAC PDU transmission, the base station may restrict the UE to include at least one carrier that includes exceptional pool(s) (e.g., or normal TX pool(s) or normal RX pool(s)) for which PSFCH resources are configured. The present disclosure is not limited thereto.

When forming a unicast session or a groupcast or a broadcast session that performs HARQ-feedback-enabled MAC PDU transmission, the UE may be restricted to include at least one carrier that includes exceptional pool(s) (e.g., or normal TX pool(s) or normal RX pool(s)) for which PSFCH resources are configured. The present disclosure is not limited thereto.

In the present disclosure, a CBR threshold related to a sidelink carrier/SL BWP/SL HARQ entity may be configured per priority, per QoS profile (e.g., PDB, reliability), per SL radio bearer, or per logical channel.

In the present disclosure, a (sidelink) carrier may be interpreted as a (sidelink) BWP or a (sidelink) HARQ entity

In an embodiment of the present disclosure, "carrier" may be applied by replacing "band" or "resource block set of a specific carrier" or "resource pool set of a specific carrier" or "channel".

In an embodiment of the present disclosure, the beam management operation may be interpreted interchangeably as beam selection, spatial filter selection, beam pairing, spatial filter pairing, beam failure recovery (BFR), spatial filter recovery, beam sweeping, spatial filter sweeping, beam switching, spatial filter sweeping, reference signal (RS) resource measurement, RS resource measurement reporting, beam reporting, spatial filter reporting, and the like.

In an embodiment of the present disclosure, a beam may be interpreted interchangeably as an RS, an RS resource, or a spatial filter resource.

In an embodiment of the present disclosure, an RS may be interpreted interchangeably as an RS resource or a spatial filter resource.

In an embodiment of the present disclosure, a transmitting UE may be interpreted interchangeably as a UE transmitting a beam, a UE transmitting a beam RS, or a UE transmitting beam RS resources.

In an embodiment of the present disclosure, a receiving UE may be interpreted interchangeably as a UE receiving a beam, a UE receiving a beam RS, or a UE receiving beam RS resources.

In an embodiment of the present disclosure, information for a transmit or receive beam transmitted/received by the UE may be interpreted interchangeably as resource information of the reference signal (RS) related to the transmit beam and resource information of the RS related to the receive beam.

In an embodiment of the present disclosure, the direct communication request (DCR) message and/or the direct communication accept (DCA) message may be interpreted interchangeably as a PC5-S (sidelink) DCR message and/or a PC5-S (sidelink) DCA message.

In an embodiment of the present disclosure, although (SL) CSI-RS is exemplified as an RS for beam management, it is not limited thereto. The proposed operations in this disclosure may be equally extended and applied to cases using other reference signals (RS) (e.g., (sidelink) SSB) for beam management besides (SL) CSI-RS.

In an embodiment of the present disclosure, although RSRP is exemplified as RS measurement for beam management, it is not limited thereto. The proposed operations in this disclosure may be equally extended and applied to other measurement operations (e.g., received signal strength indicator (RSSI) measurement) for RS measurement for beam management.

In an embodiment of the present disclosure, spatial setting and/or transmission configuration indicator (TCI) information and/or quasi-colocation (QCL) information and/or beam may refer to each other and/or may be interpreted interchangeably as beam-related information, beam direction, spatial domain transmission filter, and/or spatial domain reception filter. For example, the spatial domain transmission filter may be a spatial domain TX filter. For example, the spatial domain reception filter may be a spatial domain RX filter.

In an embodiment of the present disclosure, a beam may be interpreted interchangeably as a spatial filter.

In an embodiment of the present disclosure, a transmit/transmission beam may be interpreted interchangeably as a spatial transmission (TX) filter or a spatial domain transmission (TX) filter.

In an embodiment of the present disclosure, a beam may be interpreted interchangeably as a transmit beam, receive beam, spatial filter, spatial transmission (TX) filter, spatial domain transmission (TX) filter, spatial reception (RX) filter, or spatial domain reception (RX) filter.

In an embodiment of the present disclosure, a receive beam may be interpreted interchangeably as a spatial reception (RX) filter or a spatial domain reception (RX) filter.

In an embodiment of the present disclosure, spatial setting information (or beam information) being the same for transmission may mean that the spatial domain TX filters of the UE are the same for two different transmission signals. In an embodiment of the present disclosure, spatial setting information (or beam information) being the same for reception may mean that two different reception signals are in a QCL 'Type D' relationship and/or use the same spatial RX parameters.

For example, whether or not (some of) the proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not (some of) the proposed schemes/rules of the present disclosure are applied and/or related parameters (e.g., thresholds) may be specifically (or differently or independently) configured based on whether LBT succeeds/fails, per LBT-related energy detection levels, per sidelink channels (PSCCH/PSSCH, PSFCH, SL-SSB (or S-SSB)), based on whether MCSt (Multi-Consecutive Slot Transmission) is applied, based on whether multi-PSFCH occasions are applied, based on resource order/location consist of MCSt, based on whether multiple starting points are configured within one slot, based on whether the 1st starting point (or 2nd starting point) is applied, etc.

Whether or not (some of) the proposed schemes/rules of the present disclosure are applied and/or related parameters (e.g., thresholds) may be specifically (or differently or independently) configured based on whether LBT succeeds/fails, per LBT-related energy detection levels, per sidelink channels (PSCCH/PSSCH, PSFCH, SL-SSB (or S-SSB)), based on whether MCSt (Multi-Consecutive Slot Transmission) is applied, based on whether multi-PSFCH occasions are applied, based on resource order/location consist of MCSt, based on whether multiple starting points are configured within one slot, based on whether the 1st starting point (or 2nd starting point) is applied, etc.

For example, the present disclosure (whether or not (some of) the proposed method/rule of the present disclosure is applied and/or related parameter(s) (e.g., threshold value(s))) may be configured (differently or independently) for each resource pool. For example, the present disclosure (whether or not (some of) the proposed method/rule of the present disclosure is applied and/or related parameter(s) (e.g., threshold value(s))) may be configured (differently or independently) for each congestion level. For example, the present disclosure (whether or not (some of) the proposed method/rule of the present disclosure is applied and/or related parameter(s) (e.g., threshold value(s))) may be configured (differently or independently) for each service priority. For example, the present disclosure (whether or not (some of) the proposed method/rule of the present disclosure is applied and/or related parameter(s) (e.g., threshold value(s))) may be configured (differently or independently) for each service type. For example, the present disclosure (whether or not (some of) the proposed method/rule of the present disclosure is applied and/or related parameter(s) (e.g., threshold value(s))) may be configured (differently or independently) for each QoS requirement (e.g., latency, reliability). For example, the present disclosure (whether or not (some of) the proposed method/rule of the present disclosure is applied and/or related parameter(s) (e.g., threshold value(s))) may be configured (differently or independently) for each PQI (5G QoS identifier (5QI) for PC5). For example, the present disclosure (whether or not (some of) the proposed method/rule of the present disclosure is applied and/or related parameter(s) (e.g., threshold value(s))) may be configured (differently or independently) for each traffic type (e.g., periodic generation or aperiodic generation). For example, the present disclosure (whether or not (some of) the proposed method/rule of the present disclosure is applied and/or related parameter(s) (e.g., threshold value(s))) may be configured (differently or independently) for each SL transmission resource allocation mode (e.g., mode 1 or mode 2). For example, the present disclosure (whether or not (some of) the proposed method/rule of the present disclosure is applied and/or related parameter(s) (e.g., threshold value(s))) may be configured (differently or independently) for each Tx profile (e.g., a Tx profile indicating that a service supports sidelink DRX operation or a Tx profile indicating that a service does not need to support sidelink DRX operation).

For example, the present disclosure (e.g., whether or not the proposed rule is applied (and/or a related parameter configured value)) may be specifically (and/or independently and/or differently) configured for at least one of: whether to support PUCCH configuration (e.g., in a case where a PUCCH resource is configured or in a case where a PUCCH resource is not configured), a resource pool (e.g., a resource pool where a PSFCH is configured, or a resource pool where a PSFCH is not configured), service/packet type (and/or priority), a QoS profile or QoS requirement (e.g., URLLC/eMBB traffic, reliability, latency), PQI, PFI, cast type (e.g., unicast, groupcast, broadcast), a congestion level of a resource pool (e.g., CBR), SL HARQ feedback scheme (e.g., NACK-only feedback, ACK/NACK feedback), a case of transmitting a HARQ feedback enabled MAC PDU (and/or a HARQ feedback disabled MAC PDU), whether to configure a PUCCH-based SL HARQ feedback reporting operation, a case of (non-)performing pre-emption (and/or re-evaluation) (or resource reselection based thereon), (L2 or L1) identifiers (source and/or destination), (L2 or L1) identifiers of a combination of source layer ID and destination layer ID, identifiers of a combination of a pair of source layer ID and destination layer ID and a cast type, a direction of a pair of source layer ID and destination layer ID, PC5 RRC connection/link, a case of (non-)performing (or supporting) SL DRX, an SL mode type (resource allocation mode 1, resource allocation mode 2), (non-)performing periodic resource reservation, and a Tx profile (e.g., a Tx profile indicating that the service supports sidelink DRX operation, or a Tx profile indicating that the service does not need to support sidelink DRX operation).

The proposal and whether or not the proposal rule of the present disclosure is applied (and/or related parameter configuration value(s)) may also be applied to a mmWave SL operation.

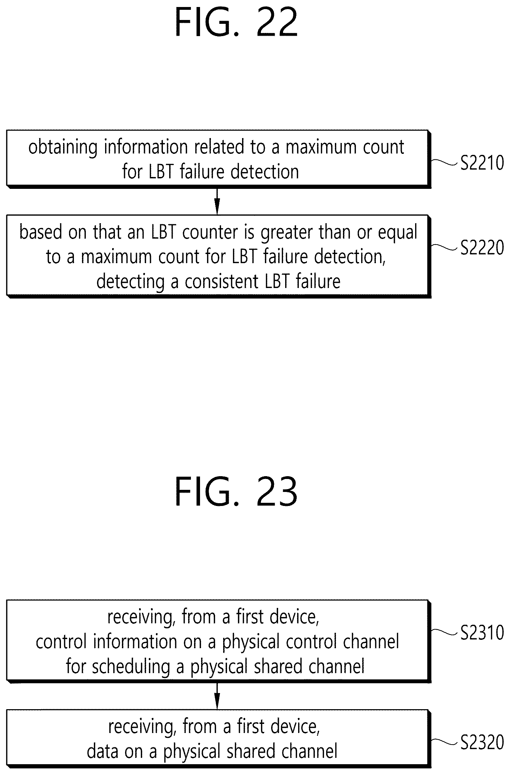

FIG. 22 shows a method for a first device to perform wireless communication, based on an embodiment of the present disclosure. The embodiment of FIG. 22 may be combined with various embodiments of the present disclosure.

Referring to FIG. 22, in step S2210, the first device may obtain information related to a maximum count for listen before talk (LBT) failure detection. In step S2220, the first device may, based on that an LBT counter is greater than or equal to the maximum count for the LBT failure detection, detect a consistent LBT failure. For example, based on that information related to an LBT failure for the first RB set is obtained, a first LBT counter may be incremented by 1 for a first resource block (RB) set. For example, based on that the first LBT counter is incremented by 1 for the first RB set, and based on that a guard band between RB sets is not configured, a second LBT counter may be incremented by 1 for a second RB set different from the first RB set.

For example, the LBT counter may be incremented per RB set. For example, the consistent LBT failure may be detected per RB set.

For example, based on that the first LBT counter is greater than or equal to the maximum count for the LBT failure detection, a first consistent LBT failure may be detected for the first RB set. For example, based on that the second LBT counter is greater than or equal to the maximum count for the LBT failure detection, a second consistent LBT failure may be detected for the second RB set.

For example, the second resource block (RB) set may be a contiguous RB set to the first RB set.

For example, resources in the first RB set in which the first consistent LBT failure is detected and the second RB set in which the second consistent LBT failure is detected may be excluded from resource reselection.

For example, the resource reselection may be triggered in resources excluding the resources in the first RB set in which the first consistent LBT failure is detected and the second RB set in which the second consistent LBT failure is detected.

For example, a grant related to the first RB set in which the first consistent LBT failure is detected and the second RB set in which the second consistent LBT failure is detected may be cleared,

For example, based on that the consistent LBT failure has been detected for all RB sets, a radio link failure (RLF) may be detected.

For example, based on that the consistent LBT failure is detected per resource pool, resources in a first resource pool including the first RB set in which the first consistent LBT failure is detected and a second resource pool including the second RB set in which the second consistent LBT failure is detected may be excluded from resource reselection.

For example, based on that the consistent LBT failure is detected per resource pool, a grant related to a first resource pool including the first RB set in which the first consistent LBT failure is detected and a second resource pool including the second RB set in which the second consistent LBT failure is detected may be cleared.

For example, based on that the consistent LBT failure is detected per bandwidth part (BWP), resources in a first BWP including the first RB set in which the first consistent LBT failure is detected and a BWP including the second RB set in which the second consistent LBT failure is detected may be excluded from resource selection or reselection.

For example, based on that the consistent LBT failure is detected per BWP, a grant related to a first BWP including the first RB set in which the first consistent LBT failure is detected and a BWP including the second RB set in which the second consistent LBT failure is detected may be cleared.

For example, the consistent LBT failure may be a sidelink consistent LBT failure. The proposed method can be applied to the device, based on various embodiments of the present disclosure. First, the processor 102 of the first device 100 may obtain information related to a maximum count for listen before talk (LBT) failure detection. In addition, the processor 102 of the first device 100 may, based on that an LBT counter is greater than or equal to the maximum count for the LBT failure detection, detect a consistent LBT failure. For example, based on that information related to an LBT failure for the first RB set is obtained, a first LBT counter may be incremented by 1 for a first resource block (RB) set. For example, based on that the first LBT counter is incremented by 1 for the first RB set, and based on that a guard band between RB sets is not configured, a second LBT counter may be incremented by 1 for a second RB set different from the first RB set.

Based on an embodiment of the present disclosure, a first device adapted to perform wireless communication may be provided. For example, the first device may include: at least one transceiver; at least one processor; and at least one memory connected to the at least one processor and storing instructions. For example, the instructions, based on being executed by the at least one processor, may cause the first device to perform operations comprising: obtaining information related to a maximum count for listen before talk (LBT) failure detection; and based on that an LBT counter is greater than or equal to the maximum count for the LBT failure detection. detecting a consistent LBT failure. For example, based on that information related to an LBT failure for the first RB set is obtained, a first LBT counter may be incremented by 1 for a first resource block (RB) set. For example, based on that the first LBT counter is incremented by 1 for the first RB set, and based on that a guard band between RB sets is not configured, a second LBT counter may be incremented by 1 for a second RB set different from the first RB set.

Based on an embodiment of the present disclosure, a processing device adapted to control a first device may be provided. The processing device may include: at least one processor; and at least one memory connected to the at least one processor and storing instructions. For example, the instructions, based on being executed by the at least one processor, may cause the first device to perform operations comprising: obtaining information related to a maximum count for listen before talk (LBT) failure detection; and based on that an LBT counter is greater than or equal to the maximum count for the LBT failure detection. detecting a consistent LBT failure. For example, based on that information related to an LBT failure for the first RB set is obtained, a first LBT counter may be incremented by 1 for a first resource block (RB) set. For example, based on that the first LBT counter is incremented by 1 for the first RB set, and based on that a guard band between RB sets is not configured, a second LBT counter may be incremented by 1 for a second RB set different from the first RB set.

Based on an embodiment of the present disclosure, a non-transitory computer-readable storage medium storing instructions may be provided. For example, the instructions, based on being executed, may cause a first device to perform operations comprising: obtaining information related to a maximum count for listen before talk (LBT) failure detection; and based on that an LBT counter is greater than or equal to the maximum count for the LBT failure detection. detecting a consistent LBT failure. For example, based on that information related to an LBT failure for the first RB set is obtained, a first LBT counter may be incremented by 1 for a first resource block (RB) set. For example, based on that the first LBT counter is incremented by 1 for the first RB set, and based on that a guard band between RB sets is not configured, a second LBT counter may be incremented by 1 for a second RB set different from the first RB set.

FIG. 23 shows a method for a second device to perform wireless communication, based on an embodiment of the present disclosure. The embodiment of FIG. 23 may be combined with various embodiments of the present disclosure.

Referring to FIG. 23, in step S2310, the second device may receive, from a first device, control information on a physical control channel for scheduling a physical shared channel.

In step S2320, the second device may receive, from the first device, data on the physical shared channel. For example, information related to a maximum count for listen before talk (LBT) failure detection may be obtained by the first device. For example, based on that the reception of the data is failed due to an LBT failure, a first LBT counter for the first device may be incremented by 1 for a first resource block (RB) set in which the reception is failed. For example, based on that the first LBT counter is incremented by 1 for the first RB set, and based on that a guard band between RB sets is not configured, a second LBT counter for the first device may be incremented by 1 for a second RB set different from the first RB set.

For example, the LBT counter may be incremented per RB set. For example, the consistent LBT failure may be detected per RB set.

For example, based on that the first LBT counter is greater than or equal to the maximum count for the LBT failure detection, a first consistent LBT failure may be detected for the first RB set. For example, based on that the second LBT counter is greater than or equal to the maximum count for the LBT failure detection, a second consistent LBT failure may be detected for the second RB set.

For example, the second resource block (RB) set may be a contiguous RB set to the first RB set.

For example, resources in the first RB set in which the first consistent LBT failure is detected and the second RB set in which the second consistent LBT failure is detected may be excluded from resource reselection.

For example, the resource reselection may be triggered in resources excluding the resources in the first RB set in which the first consistent LBT failure is detected and the second RB set in which the second consistent LBT failure is detected.

For example, a grant related to the first RB set in which the first consistent LBT failure is detected and the second RB set in which the second consistent LBT failure is detected may be cleared,

For example, based on that the consistent LBT failure has been detected for all RB sets, a radio link failure (RLF) may be detected.

For example, based on that the consistent LBT failure is detected per resource pool, resources in a first resource pool including the first RB set in which the first consistent LBT failure is detected and a second resource pool including the second RB set in which the second consistent LBT failure is detected may be excluded from resource reselection.

For example, based on that the consistent LBT failure is detected per resource pool, a grant related to a first resource pool including the first RB set in which the first consistent LBT failure is detected and a second resource pool including the second RB set in which the second consistent LBT failure is detected may be cleared.

For example, based on that the consistent LBT failure is detected per bandwidth part (BWP), resources in a first BWP including the first RB set in which the first consistent LBT failure is detected and a BWP including the second RB set in which the second consistent LBT failure is detected may be excluded from resource selection or reselection.

For example, based on that the consistent LBT failure is detected per BWP, a grant related to a first BWP including the first RB set in which the first consistent LBT failure is detected and a BWP including the second RB set in which the second consistent LBT failure is detected may be cleared.

For example, the consistent LBT failure may be a sidelink consistent LBT failure.

The proposed method can be applied to the device, based on various embodiments of the present disclosure. First, the processor 202 of the second device 200 may control the transceiver 206 to receive, from a first device, control information on a physical control channel for scheduling a physical shared channel. In addition, the processor 202 of the second device 200 may control the transceiver 206 to receive, from the first device, data on the physical shared channel. For example, information related to a maximum count for listen before talk (LBT) failure detection may be obtained by the first device. For example, based on that the reception of the data is failed due to an LBT failure, a first LBT counter for the first device may be incremented by 1 for a first resource block (RB) set in which the reception is failed. For example, based on that the first LBT counter is incremented by 1 for the first RB set, and based on that a guard band between RB sets is not configured, a second LBT counter for the first device may be incremented by 1 for a second RB set different from the first RB set.

Based on an embodiment of the present disclosure, a second device adapted to perform wireless communication may be provided. For example, the second device may include: at least one transceiver; at least one processor; and at least one memory connected to the at least one processor and storing instructions. For example, the instructions, based on being executed by the at least one processor, may cause the second device to perform operations comprising: receiving, from a first device, control information on a physical control channel for scheduling a physical shared channel; and receiving, from the first device, data on the physical shared channel. For example, information related to a maximum count for listen before talk (LBT) failure detection may be obtained by the first device. For example, based on that the reception of the data is failed due to an LBT failure, a first LBT counter for the first device may be incremented by 1 for a first resource block (RB) set in which the reception is failed. For example, based on that the first LBT counter is incremented by 1 for the first RB set, and based on that a guard band between RB sets is not configured, a second LBT counter for the first device may be incremented by 1 for a second RB set different from the first RB set.

Based on an embodiment of the present disclosure, a processing device adapted to control a second device may be provided. The processing device may include: at least one processor; and at least one memory connected to the at least one processor and storing instructions. For example, the instructions, based on being executed by the at least one processor, may cause the second device to perform operations comprising: receiving, from a first device, control information on a physical control channel for scheduling a physical shared channel; and receiving, from the first device, data on the physical shared channel. For example, information related to a maximum count for listen before talk (LBT) failure detection may be obtained by the first device. For example, based on that the reception of the data is failed due to an LBT failure, a first LBT counter for the first device may be incremented by 1 for a first resource block (RB) set in which the reception is failed. For example, based on that the first LBT counter is incremented by 1 for the first RB set, and based on that a guard band between RB sets is not configured, a second LBT counter for the first device may be incremented by 1 for a second RB set different from the first RB set.

Based on an embodiment of the present disclosure, a non-transitory computer-readable storage medium storing instructions may be provided. For example, the instructions, based on being executed, may cause a second device to perform operations comprising: receiving, from a first device, control information on a physical control channel for scheduling a physical shared channel; and receiving, from the first device, data on the physical shared channel. For example, information related to a maximum count for listen before talk (LBT) failure detection may be obtained by the first device. For example, based on that the reception of the data is failed due to an LBT failure, a first LBT counter for the first device may be incremented by 1 for a first resource block (RB) set in which the reception is failed. For example, based on that the first LBT counter is incremented by 1 for the first RB set, and based on that a guard band between RB sets is not configured, a second LBT counter for the first device may be incremented by 1 for a second RB set different from the first RB set.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

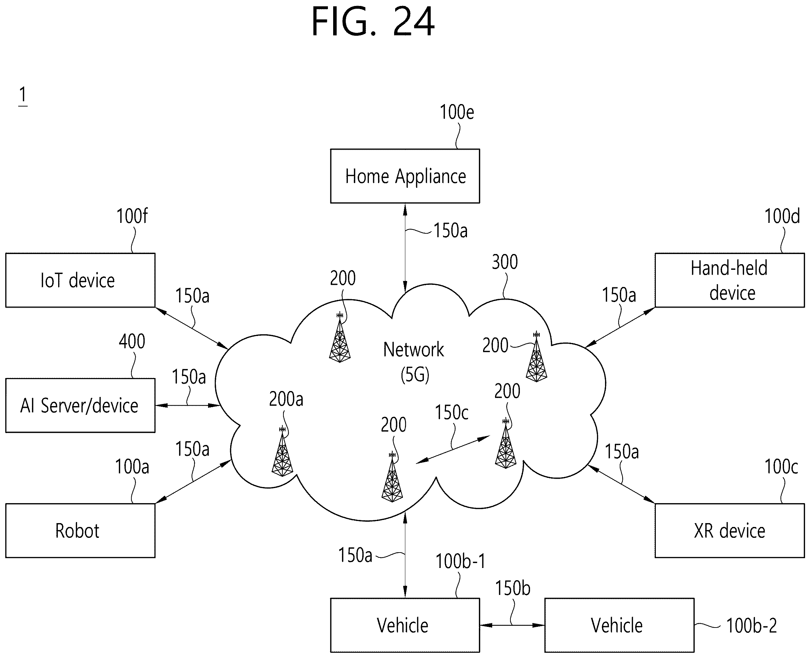

FIG. 24 shows a communication system 1, based on an embodiment of the present disclosure. The embodiment of FIG. 24 may be combined with various embodiments of the present disclosure.

Referring to FIG. 24, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

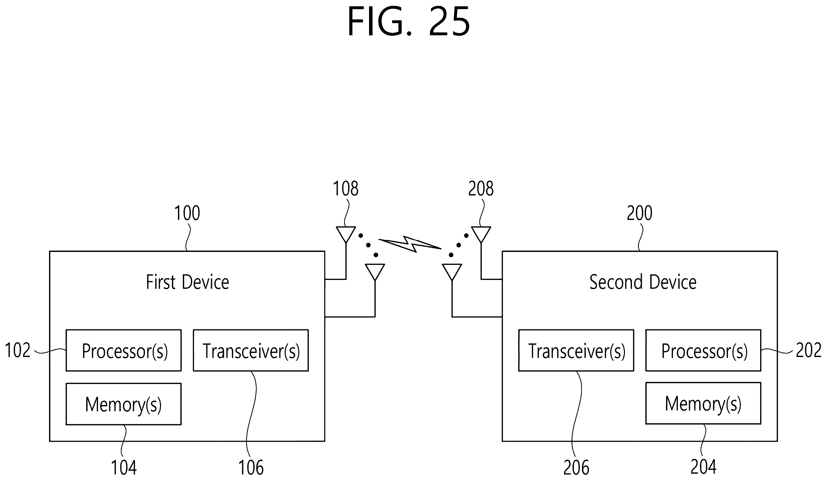

FIG. 25 shows wireless devices, based on an embodiment of the present disclosure. The embodiment of FIG. 25 may be combined with various embodiments of the present disclosure.

Referring to FIG. 25, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 24.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

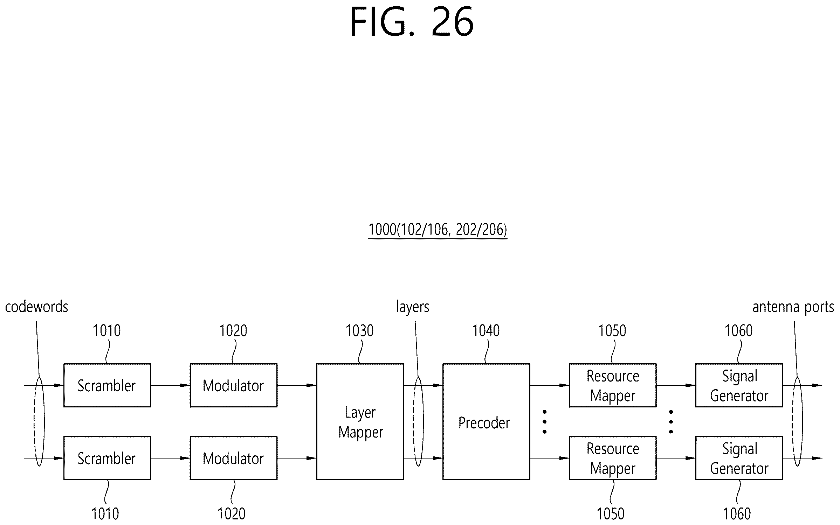

FIG. 26 shows a signal process circuit for a transmission signal, based on an embodiment of the present disclosure. The embodiment of FIG. 26 may be combined with various embodiments of the present disclosure.

Referring to FIG. 26, a signal processing circuit 1000 may include scramblers 1010, modulators 1020, a layer mapper 1030, a precoder 1040, resource mappers 1050, and signal generators 1060. An operation/function of FIG. 26 may be performed, without being limited to, the processors 102 and 202 and/or the transceivers 106 and 206 of FIG. 25. Hardware elements of FIG. 26 may be implemented by the processors 102 and 202 and/or the transceivers 106 and 206 of FIG. 25. For example, blocks 1010 to 1060 may be implemented by the processors 102 and 202 of FIG. 25. Alternatively, the blocks 1010 to 1050 may be implemented by the processors 102 and 202 of FIG. 25 and the block 1060 may be implemented by the transceivers 106 and 206 of FIG. 25.

Codewords may be converted into radio signals via the signal processing circuit 1000 of FIG. 26. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 26. For example, the wireless devices (e.g., 100 and 200 of FIG. 25) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

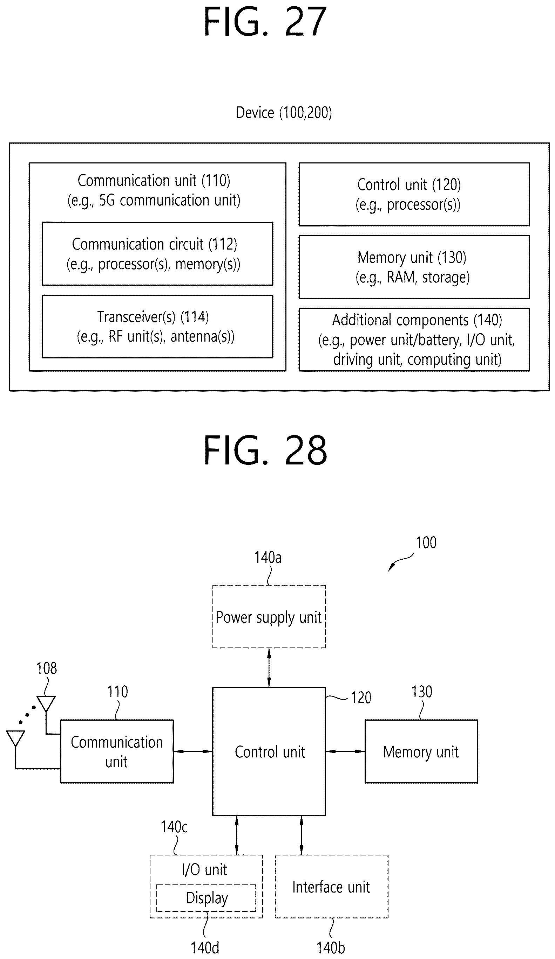

FIG. 27 shows another example of a wireless device, based on an embodiment of the present disclosure. The wireless device may be implemented in various forms according to a use-case/service (refer to FIG. 24). The embodiment of FIG. 27 may be combined with various embodiments of the present disclosure.

Referring to FIG. 27, wireless devices 100 and 200 may correspond to the wireless devices 100 and 200 of FIG. 25 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 25. For example, the transceiver(s) 114 may include the one or more transceivers 106 and 206 and/or the one or more antennas 108 and 208 of FIG. 25. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 24), the vehicles (100b-1 and 100b-2 of FIG. 24), the XR device (100c of FIG. 24), the hand-held device (100d of FIG. 24), the home appliance (100e of FIG. 24), the IoT device (100f of FIG. 24), a digital broadcast terminal, a hologram device, a public safety device, an MTC device, a medicine device, a fintech device (or a finance device), a security device, a climate/environment device, the AI server/device (400 of FIG. 24), the BSs (200 of FIG. 24), a network node, etc. The wireless device may be used in a mobile or fixed place according to a use-example/service.

In FIG. 27, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 27 will be described in detail with reference to the drawings.

FIG. 28 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 28 may be combined with various embodiments of the present disclosure.

Referring to FIG. 28, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 27, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

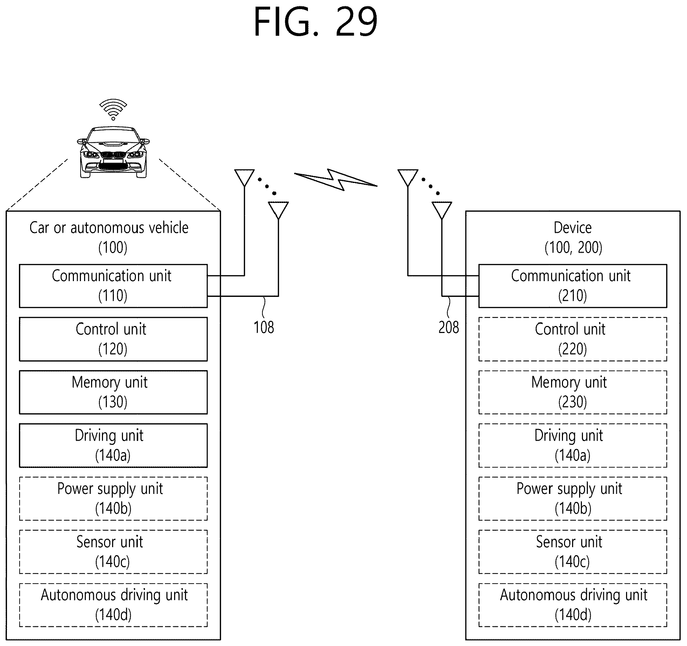

FIG. 29 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 29 may be combined with various embodiments of the present disclosure.

Referring to FIG. 29, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 27, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method performed by a first device in a wireless communication system, the method comprising:
obtaining information related to a maximum count for listen before talk (LBT) failure detection; and
based on that an LBT counter is greater than or equal to the maximum count for the LBT failure detection, detecting a consistent LBT failure,
wherein, based on that information related to an LBT failure for the first RB set is obtained, a first LBT counter is incremented by 1 for a first resource block (RB) set, and
wherein, based on that the first LBT counter is incremented by 1 for the first RB set, and based on that a guard band between RB sets is not configured, a second LBT counter is incremented by 1 for a second RB set different from the first RB set.

2. The method of claim 1,
wherein the LBT counter is incremented per RB set, and
wherein the consistent LBT failure is detected per RB set.

3. The method of claim 1,
wherein, based on that the first LBT counter is greater than or equal to the maximum count for the LBT failure detection, a first consistent LBT failure is detected for the first RB set, and
wherein, based on that the second LBT counter is greater than or equal to the maximum count for the LBT failure detection, a second consistent LBT failure is detected for the second RB set.

4. The method of claim 1,
wherein the second resource block (RB) set is a contiguous RB set to the first RB set.

5. The method of claim 3,
wherein resources in the first RB set in which the first consistent LBT failure is detected and the second RB set in which the second consistent LBT failure is detected are excluded from resource reselection.

6. The method of claim 5,
wherein the resource reselection is triggered in resources excluding the resources in the first RB set in which the first consistent LBT failure is detected and the second RB set in which the second consistent LBT failure is detected.

7. The method of claim 3,
wherein a grant related to the first RB set in which the first consistent LBT failure is detected and the second RB set in which the second consistent LBT failure is detected is cleared,

8. The method of claim 1,
wherein, based on that the consistent LBT failure has been detected for all RB sets, a radio link failure (RLF) is detected.

9. The method of claim 3,
wherein, based on that the consistent LBT failure is detected per resource pool, resources in a first resource pool including the first RB set in which the first consistent LBT failure is detected and a second resource pool including the second RB set in which the second consistent LBT failure is detected are excluded from resource reselection.

10. The method of claim 3,
wherein, based on that the consistent LBT failure is detected per resource pool, a grant related to a first resource pool including the first RB set in which the first consistent LBT failure is detected and a second resource pool including the second RB set in which the second consistent LBT failure is detected is cleared.

11. The method of claim 3,
wherein, based on that the consistent LBT failure is detected per bandwidth part (BWP), resources in a first BWP including the first RB set in which the first consistent LBT failure is detected and a BWP including the second RB set in which the second consistent LBT failure is detected are excluded from resource selection or reselection.

12. The method of claim 1,
wherein, based on that the consistent LBT failure is detected per BWP, a grant related to a first BWP including the first RB set in which the first consistent LBT failure is detected and a BWP including the second RB set in which the second consistent LBT failure is detected is cleared.

13. The method of claim 1,
wherein the consistent LBT failure is a sidelink consistent LBT failure.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
obtaining information related to a maximum count for listen before talk (LBT) failure detection; and
based on that an LBT counter is greater than or equal to the maximum count for the LBT failure detection, detecting a consistent LBT failure,
wherein, based on that information related to an LBT failure for the first RB set is obtained, a first LBT counter is incremented by 1 for a first resource block (RB) set, and
wherein, based on that the first LBT counter is incremented by 1 for the first RB set, and based on that a guard band between RB sets is not configured, a second LBT counter is incremented by 1 for a second RB set different from the first RB set.

15. A processing device adapted to control a first device, the processing device comprising:
at least one processor; and
at least one memory connected to the at least one processor and storing instructions that, based on being executed by the at least one processor, cause the first device to perform operations comprising:
obtaining information related to a maximum count for listen before talk (LBT) failure detection; and
based on that an LBT counter is greater than or equal to the maximum count for the LBT failure detection, detecting a consistent LBT failure,
wherein, based on that information related to an LBT failure for the first RB set is obtained, a first LBT counter is incremented by 1 for a first resource block (RB) set, and
wherein, based on that the first LBT counter is incremented by 1 for the first RB set, and based on that a guard band between RB sets is not configured, a second LBT counter is incremented by 1 for a second RB set different from the first RB set.

16. A non-transitory computer-readable storage medium storing instructions that, based on being executed, cause a first device to perform operations comprising:
obtaining information related to a maximum count for listen before talk (LBT) failure detection; and
based on that an LBT counter is greater than or equal to the maximum count for the LBT failure detection, detecting a consistent LBT failure,
wherein, based on that information related to an LBT failure for the first RB set is obtained, a first LBT counter is incremented by 1 for a first resource block (RB) set, and
wherein, based on that the first LBT counter is incremented by 1 for the first RB set, and based on that a guard band between RB sets is not configured, a second LBT counter is incremented by 1 for a second RB set different from the first RB set.

17. A method performed by a second device in a wireless communication system, the method comprising:
receiving, from a first device, control information on a physical control channel for scheduling a physical shared channel; and
receiving, from the first device, data on the physical shared channel,
wherein information related to a maximum count for listen before talk (LBT) failure detection is obtained by the first device,
wherein, based on that the reception of the data is failed due to an LBT failure, a first LBT counter for the first device is incremented by 1 for a first resource block (RB) set in which the reception is failed, and
wherein, based on that the first LBT counter is incremented by 1 for the first RB set, and based on that a guard band between RB sets is not configured, a second LBT counter for the first device is incremented by 1 for a second RB set different from the first RB set.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
receiving, from a first device, control information on a physical control channel for scheduling a physical shared channel; and
receiving, from the first device, data on the physical shared channel,
wherein information related to a maximum count for listen before talk (LBT) failure detection is obtained by the first device,
wherein, based on that the reception of the data is failed due to an LBT failure, a first LBT counter for the first device is incremented by 1 for a first resource block (RB) set in which the reception is failed, and
wherein, based on that the first LBT counter is incremented by 1 for the first RB set, and based on that a guard band between RB sets is not configured, a second LBT counter for the first device is incremented by 1 for a second RB set different from the first RB set.

19. A processing device adapted to control a second device, the processing device comprising:
at least one processor; and
at least one memory connected to the at least one processor and storing instructions that, based on being executed by the at least one processor, cause the second device to perform operations comprising:
receiving, from a first device, control information on a physical control channel for scheduling a physical shared channel; and
receiving, from the first device, data on the physical shared channel,
wherein information related to a maximum count for listen before talk (LBT) failure detection is obtained by the first device,
wherein, based on that the reception of the data is failed due to an LBT failure, a first LBT counter for the first device is incremented by 1 for a first resource block (RB) set in which the reception is failed, and
wherein, based on that the first LBT counter is incremented by 1 for the first RB set, and based on that a guard band between RB sets is not configured, a second LBT counter for the first device is incremented by 1 for a second RB set different from the first RB set.

20. A non-transitory computer-readable storage medium storing instructions that, based on being executed, cause a second device to perform operations comprising:
receiving, from a first device, control information on a physical control channel for scheduling a physical shared channel; and
receiving, from the first device, data on the physical shared channel,
wherein information related to a maximum count for listen before talk (LBT) failure detection is obtained by the first device,
wherein, based on that the reception of the data is failed due to an LBT failure, a first LBT counter for the first device is incremented by 1 for a first resource block (RB) set in which the reception is failed, and
wherein, based on that the first LBT counter is incremented by 1 for the first RB set, and based on that a guard band between RB sets is not configured, a second LBT counter for the first device is incremented by 1 for a second RB set different from the first RB set.
